(19) Europäisches Patentamt / European Patent Office / Office européen des brevets

(11) **EP 4 580 134 A1**

(12) **EUROPEAN PATENT APPLICATION**
published in accordance with Art. 153(4) EPC

(43) Date of publication:
**02.07.2025  Bulletin 2025/27**

(21) Application number: **22956754.0**

(22) Date of filing: **29.08.2022**

(51) International Patent Classification (IPC):
**H04L 27/00** *(2006.01)*

(52) Cooperative Patent Classification (CPC):
**H04L 27/00**

(86) International application number:
**PCT/CN2022/115644**

(87) International publication number:
**WO 2024/044919 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **XI, Xiaojun
  Shenzhen, Guangdong 518129 (CN)**
• **BI, Xiaoyan
  Shenzhen, Guangdong 518129 (CN)**
• **LIU, Yong
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57)    This application provides a communication method and apparatus, to reduce a quantity of precoding matrix scanning times of a RIS. Based on the method, a RIS receives a first signal from a transmitter by using a plurality of precoding matrices in a first codebook of the RIS. Channel measurement information corresponding to the first signal may be used to determine a first precoding matrix in the plurality of precoding matrices in the first codebook. The RIS may further reflect a second signal to a receiver by using a plurality of precoding matrices in a third codebook. The plurality of precoding matrices in the third codebook correspond to the first precoding matrix and a plurality of precoding matrices in a second codebook. Therefore, a second precoding matrix in the plurality of precoding matrices in the second codebook can be determined based on channel measurement information corresponding to the second signal. The first precoding matrix and the second precoding matrix correspond to a precoding matrix in the third codebook. Therefore, a precoding matrix of the RIS can be determined.

FIG. 8

**Description**

TECHNICAL FIELD

This application relates to the field of mobile communication technologies, and in particular, to a communication method and apparatus.

BACKGROUND

At present, a RIS-assisted network technology of controlling a characteristic of a channel by using a reconfigurable intelligent meta-surface (reconfigurable intelligent meta-surface, RIS) is considered as a key enabling technology for expanding a coverage area of a wireless communication network. When a RIS participates in signal transmission between a network device and a terminal device, the RIS reflects a signal between the network device and the terminal device by using an optimal precoding matrix of the RIS, so that quality of a channel between the network device and the terminal device can be optimal.

With reference to an existing process of determining an optimal precoding matrix used when a network device communicates with a terminal device, when a RIS participates in signal transmission between the network device and the terminal device, a large quantity of precoding matrices in a codebook of the RIS need to be scanned to determine an optimal precoding matrix of the RIS. There is a problem of excessive precoding matrix scanning times, and consequently a scanning latency is increased.

SUMMARY

This application provides a communication method and apparatus, to provide a manner of determining a precoding matrix of a RIS, to reduce a quantity of precoding matrix scanning times of the RIS.

According to a first aspect, this application provides a communication method, to reduce a quantity of precoding matrix scanning times of a RIS. The method may be implemented by a RIS or a component (for example, a RIS apparatus) in the RIS. The component in this application may include, for example, at least one of a processor, a transceiver, a processing unit, or a transceiver unit. For example, an execution body is a RIS. The method may be implemented by using the following steps: The RIS receives a first signal from a transmitter by using a plurality of precoding matrices in a first codebook of the RIS, where channel measurement information corresponding to the first signal is used to determine a first precoding matrix, the plurality of precoding matrices in the first codebook include the first precoding matrix, the first codebook is used to adjust a characteristic of a channel between the transmitter and the RIS, one precoding matrix in the first codebook and one precoding matrix in a second codebook of the RIS correspond to one precoding matrix in a third codebook of the RIS, the second codebook is used to adjust a characteristic of a channel between the RIS and a receiver, and the third codebook is used to adjust a characteristic of a channel between the transmitter, the RIS, and the receiver. The RIS may further reflect a second signal to the receiver by using a plurality of precoding matrices in the third codebook, where the second signal is from the transmitter, channel measurement information corresponding to the second signal is used to determine a second precoding matrix, the plurality of precoding matrices in the third codebook correspond to the first precoding matrix and a plurality of precoding matrices in the second codebook, and the plurality of precoding matrices in the second codebook include the second precoding matrix.

Based on the method in the first aspect, the RIS receives the first signal from the transmitter by using the plurality of precoding matrices in the first codebook of the RIS. Therefore, the first precoding matrix in the plurality of precoding matrices in the first codebook can be determined based on the channel measurement information corresponding to the first signal. The RIS may further reflect the second signal to the receiver by using the plurality of precoding matrices in the third codebook. The plurality of precoding matrices in the third codebook correspond to the first precoding matrix and the plurality of precoding matrices in the second codebook. Therefore, the second precoding matrix in the plurality of precoding matrices in the second codebook can be determined based on the channel measurement information corresponding to the second signal. Because one precoding matrix in the first codebook and one precoding matrix in the second codebook correspond to one precoding matrix in the third codebook, the RIS may determine a precoding matrix in the third codebook based on the first precoding matrix and the second precoding matrix, and use the precoding matrix to reflect a signal between the transmitter and the receiver. Therefore, an optimal precoding matrix of the RIS is determined.

It is assumed that a quantity of the plurality of precoding matrices in the first codebook is M, a quantity of the plurality of precoding matrices in the second codebook is N, and M and N are positive integers. Because one precoding matrix in the first codebook and one precoding matrix in the second codebook correspond to one precoding matrix in the third codebook, the third codebook includes $M \times N$ precoding matrices in total, to be specific, if all precoding matrices in the third codebook are scanned, the RIS needs to scan the $M \times N$ precoding matrices to determine the optimal precoding matrix. However, in the method in the first aspect, because the plurality of precoding matrices in the third codebook that are used when the RIS reflects the second signal correspond to the first precoding matrix and the N precoding matrices in the second codebook, a quantity of the plurality of precoding matrices in the third codebook is N. In other words, in this method, the RIS needs to receive the first signal by using only the M precoding matrices, and reflect the second signal by using only the N precoding matrices. Therefore, the optimal precoding matrix of the RIS can be determined by scanning only the M+N precoding matrices in total. Compared with the solution of scanning all the precoding matrices in the third codebook, when M or N is greater than 2, a quantity of beam scanning times can be reduced, to reduce a scanning latency.

In a possible implementation, the RIS may further determine the first precoding matrix from the plurality of precoding matrices in the first codebook of the RIS based on the channel measurement information corresponding to the first signal.

Based on this implementation, the RIS may determine the first precoding matrix based on the received channel measurement information corresponding to the first signal. Therefore, the first precoding matrix is flexibly determined.

In a possible implementation, the RIS may further send indication information of the first precoding matrix to a network device, where the network device includes the transmitter or the receiver, and the indication information of the first precoding matrix is used to determine the first precoding matrix.

Based on this implementation, after determining the first precoding matrix, the RIS may indicate the first precoding matrix to the network device, so that the network device determines the first precoding matrix.

In a possible implementation, the RIS may further send the channel measurement information corresponding to the first signal to a network device, where the network device includes the transmitter or the receiver.

Based on this implementation, the RIS may send the channel measurement information corresponding to the first signal to the network device, so that the network device determines the first precoding matrix based on the channel measurement information corresponding to the first signal. Therefore, the first precoding matrix is flexibly determined.

In a possible implementation, the RIS may further receive indication information of the first precoding matrix from the network device, and determine the first precoding matrix based on the indication information of the first precoding matrix.

Based on this implementation, the RIS may determine the first precoding matrix based on the indication information that is of the first precoding matrix and that is sent by the network device.

In a possible implementation, the RIS may receive first indication information from the network device, where the first indication information indicates the RIS to receive the first signal by using the plurality of precoding matrices in the first codebook of the RIS.

Based on this implementation, the RIS may receive the first signal by using the plurality of precoding matrices in the first codebook according to the first indication information, so that the precoding matrices in the first codebook are scanned.

In a possible implementation, the RIS may further receive indication information of the second precoding matrix from the network device, where the network device includes the transmitter or the receiver. The RIS may further determine the second precoding matrix based on the indication information of the second precoding matrix.

Based on this implementation, the RIS may determine the second precoding matrix based on the received indication information of the second precoding matrix. Therefore, the second precoding matrix is flexibly determined.

In a possible implementation, the RIS may further receive the channel measurement information corresponding to the second signal from the network device, where the network device includes the transmitter or the receiver. The RIS may further determine the second precoding matrix from the plurality of precoding matrices in the second codebook based on the received channel measurement information corresponding to the second signal.

Based on this implementation, the RIS may determine the second precoding matrix from the plurality of precoding matrices in the second codebook based on the received channel measurement information corresponding to the second signal. Therefore, the second precoding matrix is flexibly determined.

In a possible implementation, the RIS may further send indication information of the second precoding matrix to the network device, where the indication information of the second precoding matrix is used to determine the second precoding matrix.

Based on this implementation, after determining the second precoding matrix, the RIS may indicate the second precoding matrix to the network device, so that the network device determines the second precoding matrix.

In a possible implementation, the RIS may further receive second indication information from the network device, where the second indication information indicates the RIS to reflect the second signal to the receiver by using the plurality of precoding matrices in the third codebook.

Based on this implementation, the RIS may send the second signal by using the plurality of precoding matrices in the third codebook according to the second indication information. Optionally, the second indication information may include indication information of the plurality of precoding matrices in the second codebook, or the second indication information may include indication information of the plurality of precoding matrices in the third codebook.

According to a second aspect, this application provides a communication method, to reduce a quantity of precoding matrix scanning times of a RIS. The method may be implemented by a first apparatus. The first apparatus may be a network device or a component (for example, a chip or a chip system) in the network device. The component in this application may include, for example, at least one of a processor, a transceiver, a processing unit, or a transceiver unit. For example, an execution body is a network device. The method may be implemented by using the following steps: The network device sends first indication information to a RIS, where the first indication information indicates the RIS to receive a first signal from a transmitter by using a plurality of precoding matrices in a first codebook of the RIS, channel measurement information corresponding to the first signal is used to determine a first precoding matrix, the plurality of precoding matrices in the first codebook include the first precoding matrix, the first codebook is used to adjust a characteristic of a channel between the transmitter and the RIS, one precoding matrix in the first codebook and one precoding matrix in a second codebook of the RIS correspond to one precoding matrix in a third codebook of the RIS, the second codebook is used to adjust a characteristic of a channel between the RIS and a receiver, and the third codebook is used to adjust a characteristic of a channel between the transmitter, the RIS, and the receiver. The network device may further send second indication information to the RIS, where the second indication information indicates the RIS to reflect a second signal to the receiver by using a plurality of precoding matrices in the third codebook, the second signal is from the transmitter, channel measurement information corresponding to the second signal is used to determine a second precoding matrix, the plurality of precoding matrices in the third codebook correspond to the first precoding matrix and a plurality of precoding matrices in the second codebook, and the plurality of precoding matrices in the second codebook include the second precoding matrix.

In a possible implementation, the network device may further receive indication information of the first precoding matrix from the RIS. The network device may further determine the first precoding matrix based on the indication information of the first precoding matrix.

In a possible implementation, the network device may further receive the channel measurement information corresponding to the first signal from the RIS. The network device may further determine the first precoding matrix from the plurality of precoding matrices in the first codebook of the RIS based on the channel measurement information corresponding to the first signal.

In a possible implementation, the network device may further send indication information of the first precoding matrix to the RIS, where the indication information of the first precoding matrix is used to determine the first precoding matrix.

In a possible implementation, the network device may further send indication information of the second precoding matrix to the RIS, where the indication information of the second precoding matrix is used to determine the second precoding matrix.

In a possible implementation, the network device may further send the channel measurement information corresponding to the second signal to the RIS. The network device may further receive indication information of the second precoding matrix from the RIS. The network device may further determine the second precoding matrix based on the indication information of the second precoding matrix.

In a possible implementation, the network device includes the transmitter or the receiver.

According to a third aspect, this application provides a communication method, to reduce a quantity of precoding matrix scanning times of a RIS. The method may be implemented by a RIS or a component (for example, a RIS apparatus) in the RIS. The component in this application may include, for example, at least one of a processor, a transceiver, a processing unit, or a transceiver unit. For example, an execution body is a RIS. The method may be implemented by using the following steps: The RIS reflects a third signal to a receiver by using a first group of precoding matrices, where the third signal is from a transmitter, channel measurement information corresponding to the third signal is used to determine a fourth precoding matrix, the first group of precoding matrices are a plurality of precoding matrices in a third codebook of the RIS, the first group of precoding matrices correspond to a plurality of precoding matrices in a fourth codebook and one precoding matrix in a fifth codebook, and the plurality of precoding matrices in the fourth codebook include the fourth precoding matrix. The RIS may further reflect a fourth signal to the receiver by using a second group of precoding matrices, where the second group of precoding matrices are a plurality of precoding matrices in the third codebook of the RIS, the second group of precoding matrices correspond to the fourth precoding matrix and a plurality of precoding matrices in the fifth codebook, channel measurement information corresponding to the fourth signal is used to determine a fifth precoding matrix, and the plurality of precoding matrices in the fifth codebook include the fifth precoding matrix. The fourth codebook and the fifth codebook each are a first codebook of the RIS or a second codebook of the RIS, the fourth codebook is different from the fifth codebook, one precoding matrix in the first codebook and one precoding matrix in the second codebook of the RIS correspond to one precoding matrix in the third codebook, the third codebook is used to adjust a characteristic of a channel between the transmitter, the RIS, and the receiver, the first codebook is used to adjust a characteristic of a channel between the transmitter and the RIS, and the second codebook is used to adjust a characteristic of a channel between the RIS and the receiver.

Based on the method in the third aspect, the RIS may reflect the third signal by using the first group of precoding matrices, and reflect the fourth signal by using the second group of precoding matrices. The channel measurement information corresponding to the third signal and the channel measurement information of the fourth signal may be respectively used to determine the fourth precoding matrix and the fifth precoding matrix. The fourth precoding matrix and the fifth precoding matrix may be used to determine a sixth precoding matrix. Therefore, the precoding matrix in the third codebook of the RIS can be determined. The fourth codebook and the fifth codebook each are one of the first codebook and the second codebook.

It is assumed that the fourth codebook is the first codebook, a quantity of precoding matrices included in the fourth codebook is M, the fifth codebook is the second codebook, a quantity of precoding matrices included in the fifth codebook is N, and M and N are positive integers. Because one precoding matrix in the first codebook and one precoding matrix in the second codebook correspond to one precoding matrix in the third codebook, the third codebook includes M×N precoding matrices in total, to be specific, if all precoding matrices in the third codebook are scanned, the RIS needs to scan the M×N precoding matrices to determine an optimal precoding matrix. In the method in the third aspect, the first group of precoding matrices used when the RIS reflects the third signal correspond to the M precoding matrices in the fourth codebook and one precoding matrix in the fifth codebook, in other words, the M precoding matrices are scanned. In addition, the second group of precoding matrices used when the RIS reflects the fourth signal correspond to the fourth precoding matrix and the N precoding matrices in the fifth codebook, in other words, the N precoding matrices are scanned. In other words, in this method, the RIS can determine the optimal precoding matrix of the RIS by scanning only the M+N precoding matrices in total. Compared with the solution of scanning all the precoding matrices in the third codebook, when M or N is greater than 2, a quantity of beam scanning times can be reduced, to reduce a scanning latency.

In a possible implementation, the RIS may further receive third indication information from a network device, where the third indication information indicates the RIS to reflect the third signal to the receiver by using the first group of precoding matrices.

Based on this implementation, the RIS may transmit the third signal by using the plurality of precoding matrices in the fourth codebook according to the third indication information. Optionally, the third indication information specifically includes indication information of the plurality of precoding matrices in the fourth codebook, or the third indication information specifically includes indication information of the first group of precoding matrices.

In a possible implementation, the RIS may further receive indication information of the fourth precoding matrix from the network device, where the network device includes the transmitter or the receiver. The RIS may further determine the fourth precoding matrix based on the indication information of the fourth precoding matrix.

Based on this implementation, the network device may indicate the fourth precoding matrix to the RIS. Therefore, the fourth precoding matrix can be flexibly determined.

In a possible implementation, the RIS receives fourth indication information from the network device, where the fourth indication information indicates the RIS to reflect the fourth signal to the receiver by using the second group of precoding matrices.

Based on this implementation, the RIS may reflect the fourth signal by using the plurality of precoding matrices in the fifth codebook according to the fourth indication information. Optionally, the fourth indication information specifically includes indication information of the plurality of precoding matrices in the fifth codebook, or the fourth indication information specifically includes indication information of the second group of precoding matrices.

In a possible implementation, the RIS may further receive indication information of the fifth precoding matrix from the network device, where the network device includes the transmitter or the receiver. The RIS may further determine the fifth precoding matrix based on the indication information of the fifth precoding matrix.

Based on this implementation, the network device may indicate the fifth precoding matrix to the RIS. Therefore, the fifth precoding matrix can be flexibly determined.

According to a fourth aspect, this application provides a communication method, to reduce a quantity of precoding matrix scanning times of a RIS. The method may be implemented by a first apparatus. The first apparatus may be a network device or a component (for example, a chip or a chip system) in the network device. The component in this application may include, for example, at least one of a processor, a transceiver, a processing unit, or a transceiver unit. For example, an execution body is a network device. The method may be implemented by using the following steps: The network device sends third indication information to a RIS, where the third indication information indicates the RIS to reflect a third signal to a receiver by using a first group of precoding matrices, the third signal is from a transmitter, channel measurement information corresponding to the third signal is used to determine a fourth precoding matrix, the first group of precoding matrices are a plurality of precoding matrices in a third codebook of the RIS, the first group of precoding matrices correspond to a plurality of precoding matrices in a fourth codebook and one precoding matrix in a fifth codebook, and the plurality of precoding matrices in the fourth codebook include the fourth precoding matrix. The network device sends fourth indication information to the RIS, where the third indication information indicates the RIS to reflect a fourth signal to the receiver by using a second group of precoding matrices, the second group of precoding matrices are a plurality of precoding matrices in the third codebook of the RIS, the second group of precoding matrices correspond to the fourth precoding matrix and a plurality of precoding matrices in the fifth codebook, channel measurement information corresponding to the fourth signal is used to determine a fifth precoding matrix, and the plurality of precoding matrices in the fifth codebook include the fifth precoding matrix. The fourth codebook and the fifth codebook each are a first codebook of the RIS or a second codebook of the RIS, the fourth codebook is different from the fifth codebook, one precoding matrix in the first codebook and one precoding matrix in the second codebook of the RIS correspond to one precoding matrix in the third codebook, the third codebook is used to adjust a characteristic of a channel between the transmitter, the RIS, and the receiver, the first codebook is used to adjust a characteristic of a channel between the transmitter and the RIS, and the second codebook is used to adjust a characteristic of a channel between the RIS and the receiver.

In a possible implementation, the third indication information specifically includes indication information of the plurality of precoding matrices in the fourth codebook, or the third indication information specifically includes indication information of the first group of precoding matrices.

In a possible implementation, the fourth indication information specifically includes indication information of the plurality of precoding matrices in the fifth codebook, or the fourth indication information specifically includes indication information of the second group of precoding matrices.

In a possible implementation, the network device may further send indication information of the fourth precoding matrix to the RIS, where the network device includes the transmitter or the receiver, and the indication information of the fourth precoding matrix is used to determine the fourth precoding matrix.

In a possible implementation, the network device may further send indication information of the fifth precoding matrix to the RIS, where the network device includes the transmitter or the receiver, and the indication information of the fifth precoding matrix is used to determine the fifth precoding matrix.

It may be understood that, for beneficial effects of the fourth aspect and possible implementations of the fourth aspect, refer to the descriptions of the beneficial effects of the third aspect and the corresponding possible implementations. Details are not described again.

According to a fifth aspect, this application provides a communication method, to reduce codebook feedback overheads of a RIS. The method may be implemented by a first apparatus. The first apparatus may be a terminal device, a network device, a component (for example, a chip or a chip system) in the terminal device, or a component (for example, a chip or a chip system) in the network device. The first apparatus may be configured to receive or send a reference signal and/or data, or the first apparatus may be a transmitter or a receiver. The component in this application may include, for example, at least one of a processor, a transceiver, a processing unit, or a transceiver unit. For example, an execution body is a first apparatus. The method may be implemented by using the following steps: The first apparatus obtains first information, where the first information is used to determine a first precoding matrix and/or a second precoding matrix, the first precoding matrix belongs to a first codebook, the second precoding matrix belongs to a second codebook, one precoding matrix in the first codebook and one precoding matrix in the second codebook of a RIS correspond to one precoding matrix in a third codebook, the third codebook is used to adjust a characteristic of a channel between a transmitter, the RIS, and a receiver, the first codebook is used to adjust a characteristic of a channel between the transmitter and the RIS, and the second codebook is used to adjust a characteristic of a channel between the RIS and the receiver. The first apparatus may further send second information to the RIS, where the second information indicates the first precoding matrix and/or the second precoding matrix.

Based on the method in the fifth aspect, the first apparatus may send the second information to the RIS to indicate the first precoding matrix and/or the second precoding matrix. Because the first codebook and the second codebook are used to determine the third codebook, the RIS may determine a precoding matrix in the third codebook based on the first precoding matrix and/or the second precoding matrix, and the first apparatus does not need to indicate the precoding matrix in the third codebook to the RIS. It may be understood that a quantity of precoding matrices in the third codebook is a product of a quantity of precoding matrices in the first codebook and a quantity of precoding matrices in the second codebook. Therefore, signaling overheads required for indicating one precoding matrix in the third codebook are greater than overheads for indicating one precoding matrix in the first codebook and one precoding matrix in the second codebook.

In a possible implementation, the first information includes third information, and the third information indicates a correspondence between precoding matrices in the first codebook, precoding matrices in the second codebook, and precoding matrices in the third codebook. The first apparatus may further determine a third precoding matrix, where the third precoding matrix belongs to the third codebook. The first apparatus may further determine the first precoding matrix and/or the second precoding matrix based on the third precoding matrix and the third information. Optionally, the first apparatus may obtain channel measurement information through measurement or receive channel measurement information from a second apparatus, and determine the third precoding matrix based on the channel measurement information. Alternatively, the first apparatus may receive indication information of the third precoding matrix from a second apparatus, and determine the third precoding matrix based on the indication information. The first apparatus is the transmitter, and the second apparatus is the receiver; or the first apparatus is the receiver, and the second apparatus is the transmitter.

Based on this implementation, the first apparatus may determine the third precoding matrix in the third codebook based on the channel measurement information, and determine the first precoding matrix and/or the second precoding matrix based on the third precoding matrix and the third information. Therefore, the first precoding matrix and/or the second precoding matrix are/is flexibly determined.

In a possible implementation, the first apparatus may receive the third information from the RIS. Therefore, the third information is flexibly obtained.

In a possible implementation, the first information indicates the first precoding matrix and/or the second precoding matrix, and the first apparatus may receive the first information from the second apparatus.

Based on this implementation, the first apparatus may determine the first precoding matrix and/or the second precoding matrix based on indication information of the first precoding matrix and/or indication information of the second precoding matrix. Therefore, the first precoding matrix and/or the second precoding matrix are/is flexibly determined.

In a possible implementation, the first apparatus may further send third information to the second apparatus, where the third information indicates a correspondence between the first codebook, the second codebook, and the third codebook. Based on this implementation, the first apparatus may send the third information to the second apparatus, so that the second apparatus determines the first precoding matrix and/or the second precoding matrix based on the third precoding matrix and the third information.

According to a sixth aspect, this application provides a communication method, to reduce codebook scanning duration of a RIS. The method may be implemented by a RIS or a component in the RIS. The component in this application may include, for example, at least one of a processor, a transceiver, a processing unit, or a transceiver unit. For example, an execution body is a RIS. The method may be implemented by using the following steps: The RIS sends third information to a first apparatus, where the third information indicates a correspondence between precoding matrices in a first codebook of the RIS, precoding matrices in a second codebook of the RIS, and precoding matrices in a third codebook of the RIS, one precoding matrix in the first codebook and one precoding matrix in the second codebook correspond to one precoding matrix in the third codebook, the third codebook is used to adjust a characteristic of a channel between a transmitter, the RIS, and a receiver, the first codebook is used to adjust a characteristic of a channel between the transmitter and the RIS, and the second codebook is used to adjust a characteristic of a channel between the RIS and the receiver. The RIS may further receive second information from the first apparatus, where the second information indicates a first precoding matrix and/or a second precoding matrix, the first precoding matrix belongs to the first codebook, and the second precoding matrix belongs to the second codebook.

It may be understood that, for beneficial effects of the sixth aspect and possible implementations of the sixth aspect, refer to the descriptions of the beneficial effects of the fifth aspect and the corresponding possible implementations. Details are not described again.

According to a seventh aspect, this application provides a communication method, to reduce codebook feedback overheads of a RIS. The method may be implemented by a second apparatus. The second apparatus may be a terminal device, a network device, a component (for example, a chip or a chip system) in the terminal device, or a component (for example, a chip or a chip system) in the network device. The second apparatus may be a device that receives or sends a signal and/or data used to scan a codebook of a RIS, or a component (for example, a chip or a chip system) in the device, or the second apparatus may be a transmitter or a receiver. For example, the second apparatus may be implemented by a terminal device, a network device, a component in the terminal device, or a component in the network device. The component in this application may include, for example, at least one of a processor, a transceiver, a processing unit, or a transceiver unit. For example, an execution body is a second apparatus. The method may be implemented by using the following steps: The second apparatus obtains third information, where the third information indicates a correspondence between precoding matrices in a first codebook of a RIS, precoding matrices in a second codebook of the RIS, and precoding matrices in a third codebook of the RIS, one precoding matrix in the first codebook and one precoding matrix in the second codebook of the RIS correspond to one precoding matrix in the third codebook, the third codebook is used to adjust a characteristic of a channel between a transmitter, the RIS, and a receiver, the first codebook is used to adjust a characteristic of a channel between the transmitter and the RIS, and the second codebook is used to adjust a characteristic of a channel between the RIS and the receiver. The second apparatus may further determine a third precoding matrix based on channel measurement information, where the third precoding matrix belongs to the third codebook. The second apparatus may further send first information to a first apparatus, where the first information indicates a first precoding matrix and/or a second precoding matrix, the first precoding matrix belongs to the first codebook, the second precoding matrix belongs to the second codebook, and the first precoding matrix and/or the second precoding matrix are/is determined based on the third precoding matrix and the third information.

In a possible implementation, the second apparatus may receive the third information from the first apparatus.

It may be understood that, for beneficial effects of the seventh aspect and possible implementations of the seventh aspect, refer to the descriptions of the beneficial effects of the fifth aspect and the corresponding possible implementations. Details are not described again.

According to an eighth aspect, this application provides a communication method. The communication method may be implemented by a first apparatus and a RIS. For example, execution bodies are a first apparatus and a RIS. The communication method may include the following steps: The first apparatus obtains first information. For the first information, refer to the descriptions in the fifth aspect. The first apparatus may further send second information to the RIS, where the second information indicates a first precoding matrix and/or a second precoding matrix. Correspondingly, the RIS receives the second information, to determine the first precoding matrix and/or the second precoding matrix. For the first precoding matrix and/or the second precoding matrix, refer to the descriptions in the fifth aspect or the sixth aspect.

The method in the eighth aspect may further include the method implemented by the first apparatus in any possible implementation of the fifth aspect and the method implemented by the RIS in any one of the sixth aspect or possible implementations of the sixth aspect. Optionally, the method in the eighth aspect may further include the method implemented by the second apparatus in any one of the seventh aspect or possible implementations of the seventh aspect.

Alternatively, the communication method may further include the method implemented by the RIS in any one of the first aspect or possible implementations of the first aspect and the method implemented by the network device in any one of the second aspect or possible implementations of the second aspect, or include the method implemented by the RIS in any one of the third aspect or possible implementations of the third aspect and the method implemented by the network device in any one of the fourth aspect or possible implementations of the fourth aspect.

According to a ninth aspect, a data transmission apparatus is provided. The apparatus may implement the method performed by the RIS in any one of the first aspect, the third aspect, or the fifth aspect, or possible designs of the first aspect, the third aspect, or the fifth aspect, implement the method performed by the network device in any one of the second aspect or the third aspect, or possible designs of the second aspect or the third aspect, implement the method performed by the first apparatus in any one of the sixth aspect or possible designs of the sixth aspect, or implement the method performed by the second apparatus in any one of the seventh aspect or possible designs of the seventh aspect. The apparatus is, for example, a RIS, a terminal device, a network device, a component in the RIS, a component in the terminal device, or a component in the network device.

In an optional implementation, the apparatus may include one-to-one corresponding modules for performing the methods/operations/steps/actions described in any one of the first aspect to the eight aspect or possible implementations. The module may be implemented by a hardware circuit, may be implemented by software, or may be implemented by a hardware circuit in combination with software. In an optional implementation, the apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

For another example, the apparatus includes a processor, coupled to a memory, and configured to execute instructions in the memory, to implement the method described in any one of the first aspect to the seventh aspect or possible implementations. Optionally, the apparatus further includes other components, for example, an antenna, an input/output module, and an interface. These components may be hardware, software, or a combination of software and hardware.

According to a tenth aspect, a computer-readable storage medium is provided. The computer-readable storage medium is configured to store a computer program or instructions, and when the computer program is run or the instructions are run, the method in any one of the first aspect to the seventh aspect is implemented.

According to an eleventh aspect, a computer program product including instructions is provided. When the computer program product is run on a computer, the method in any one of the first aspect to the seventh aspect is implemented.

According to a twelfth aspect, a chip system is provided. The chip system includes a logic circuit (alternatively, it may be understood that the chip system includes a processor, and the processor may include the logic circuit and the like), and may further include an input/output interface. The input/output interface may be configured to receive a message, or may be configured to send a message. The input/output interface may be a same interface, to be specific, a same interface can implement both a sending function and a receiving function. Alternatively, the input/output interface includes an input interface and an output interface. The input interface is configured to implement a receiving function, to be specific, configured to receive a message. The output interface is configured to implement a sending function, to be specific, configured to send a message. The logic circuit may be configured to perform an operation other than the sending/receiving function in the method described in any one of the first aspect to the eighth aspect or possible implementations. The logic circuit may be further configured to transmit a message to the input/output interface, or receive a message from another communication apparatus from the input/output interface. The chip system may be configured to implement the method described in any one of the first aspect to the seventh aspect or possible implementations. The chip system may include a chip, or may include a chip and another discrete component.

Optionally, the chip system may further include a memory, and the memory may be configured to store instructions. The logic circuit may invoke the instructions stored in the memory, to implement a corresponding function.

According to a thirteenth aspect, a communication system is provided. The communication system may include an apparatus configured to implement any one of the first aspect or possible designs of the first aspect and an apparatus configured to implement any one of the second aspect or possible designs of the second aspect, include an apparatus configured to implement any one of the third aspect or possible designs of the third aspect and an apparatus configured to implement any one of the fourth aspect or possible designs of the fourth aspect, or include at least two of an apparatus configured to implement any one of the fifth aspect or possible designs of the fifth aspect, an apparatus configured to implement any one of the sixth aspect or possible designs of the sixth aspect, and an apparatus configured to implement any one of the seventh aspect or possible designs of the seventh aspect.

BRIEF DESCRIPTION OF DRAWINGS

FIG. 1 is a diagram of an architecture of a wireless communication system according to an embodiment of this application;
FIG. 2 is a diagram of a beam scanning process;
FIG. 3 is a diagram of a working principle of a RIS;
FIG. 4 is a diagram of an architecture of a RIS-based communication system according to an embodiment of this application;
FIG. 5 is a diagram of a decoupling manner of a codebook of a RIS according to an embodiment of this application;
FIG. 6 is a diagram of a relationship between a codebook that is of a RIS and that exists before decoupling and codebooks of the RIS that are obtained after the decoupling according to an embodiment of this application;
FIG. 7 is a diagram of another decoupling manner of a codebook of a RIS according to an embodiment of this application;
FIG. 8 is a schematic flowchart of a communication method according to this application;
FIG. 9 is a schematic flowchart of another communication method according to this application;
FIG. 10 is a schematic flowchart of another communication method according to this application;
FIG. 11 is a schematic flowchart of another communication method according to this application;
FIG. 12 is a schematic flowchart of another communication method according to this application;
FIG. 13 is a schematic flowchart of another communication method according to this application;
FIG. 14 is a schematic flowchart of another communication method according to this application;
FIG. 15 is a schematic flowchart of another communication method according to this application;
FIG. 16 is a diagram of a structure of a communication apparatus according to this application;
FIG. 17 is a diagram of a structure of another communication apparatus according to this application; and
FIG. 18 is a diagram of a structure of another communication apparatus according to this application.

DESCRIPTION OF EMBODIMENTS

Embodiments of this application provide a data transmission method and apparatus. The method and the apparatus are based on a same inventive concept. Because the method and the apparatus have similar problem-resolving principles, for implementations of the apparatus and the method, refer to each other. No repeated description is provided. In descriptions of embodiments of this application, "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that, in descriptions of this application, words such as "first" and "second" are merely used for distinguishing description, and cannot be understood as an indication or implication of relative importance or an indication or implication of a sequence.

The data transmission method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or applied to various future communication systems, for example, a 6th generation (6th generation, 6G) communication system. The method provided in embodiments of this application may alternatively be applied to a Bluetooth system, a wireless fidelity (wireless fidelity, Wifi) system, a long range radio (long range radio, LoRa) system, or an internet of vehicles system. The method provided in embodiments of this application may alternatively be applied to a satellite communication system. The satellite communication system may be integrated with the foregoing communication system.

For ease of understanding embodiments of this application, a communication system architecture shown in FIG.

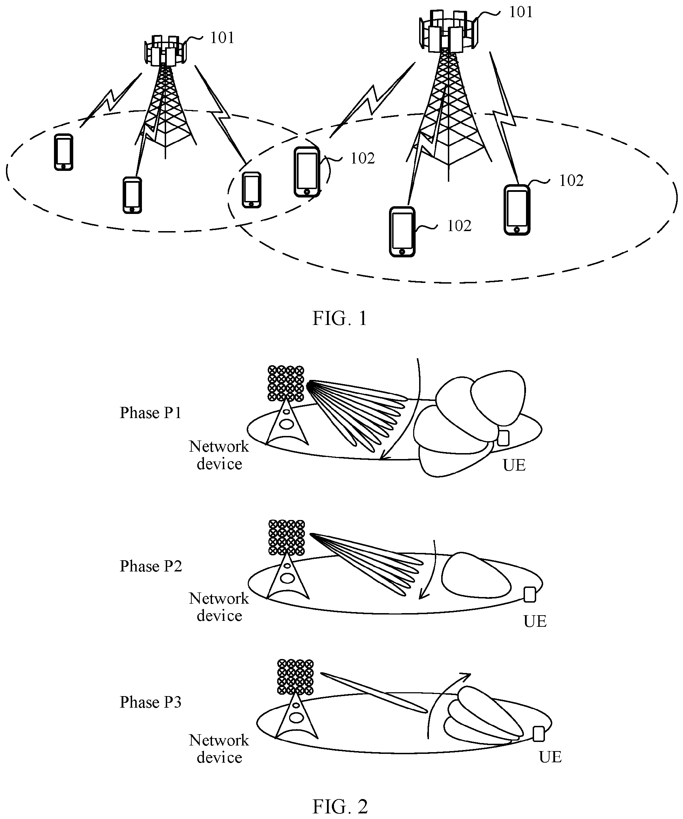

1 is used as an example to describe an application scenario used in this application. Referring to FIG. 1, a communication system 100 includes a network device 101 and a terminal device 102. The apparatus provided in embodiments of this application may be used in the network device 101, or used in the terminal device 102. It may be understood that FIG. 1 shows only one possible communication system architecture to which embodiments of this application may be applied. In another possible scenario, the communication system architecture may alternatively include other devices.

The network device 101 is a node in a radio access network (radio access network, RAN), and may also be referred to as a base station or a RAN node (or device). At present, some examples of the radio access network device are a next generation NodeB (gNodeB/gNB/NR-NB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), a wireless fidelity (wireless fidelity, Wifi) access point (access point, AP), a satellite device, a network device in a 5G communication system, and a network device in a possible future communication system. The network device 101 may alternatively be another device that has a network device function. For example, the network device 101 may alternatively be a device that functions as a network device in device-to-device (device-to-device, D2D) communication, internet of vehicles communication, or machine-to-machine communication. The network device 101 may alternatively be a network device in a possible future communication system.

In some deployments, the gNB may include a central unit (central unit, CU) and a distributed unit (distributed unit, DU). The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a medium access control (medium access control, MAC) layer, and a physical (physical, PHY) layer. Information at the RRC layer eventually becomes information at the PHY layer, or is converted from information at the PHY layer. Therefore, in this architecture, higher layer signaling such as RRC layer signaling or PDCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device 102 may also be referred to as user equipment (user equipment, UE), a mobile station (mobile station, MS), a mobile terminal (mobile terminal, MT), or the like, and is a device that provides a user with voice or data connectivity. Alternatively, the terminal device 102 may be an internet of things device. For example, the terminal device includes a handheld device or a vehicle-mounted device that has a wireless connection function. At present, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric car, an airplane, a ship, a train, or a high-speed rail), a virtual reality (virtual reality, VR) device, an augmented reality (augmented reality, AR) device, a wireless terminal in industrial control, a smart household device (for example, a refrigerator, a television, an air conditioner, or a meter), an intelligent robot, workshop equipment, a wireless terminal in self driving, a wireless terminal in remote surgery, a wireless terminal in a smart grid (smart grid), a wireless terminal in transportation safety, a wireless terminal in a smart city, a wireless terminal in a smart home, or a flight device (for example, an intelligent robot, a hot air balloon, an uncrewed aerial vehicle, or an airplane). The terminal device may alternatively be another device that has a terminal function. For example, the terminal device may alternatively be a device that functions as a terminal in D2D communication. A terminal device that has a wireless sending/receiving function and a chip that can be disposed in the terminal device are collectively referred to as a terminal device in this application.

The following describes technical terms that may be used in embodiments of this application.

(1) Beam management. 5G NR improves a wide-beam-based broadcast mechanism in an LTE era, and uses a mechanism in which narrow beams and polling scanning are used to cover an entire cell. A purpose of beam management is to properly design narrow beams and select appropriate time-frequency resources to send the narrow beams.

Broadcast beams are designed as at most N narrow beams with fixed directions, where N is a positive integer. Different narrow beams are sent at different moments to complete broadcast beam coverage of a cell. A terminal device scans each narrow beam to obtain an optimal beam, to complete synchronization and system message demodulation.

Compared with a wide beam (for example, an LTE beam), the narrow beam has a limited coverage area. One beam cannot completely cover all users in a cell, and cannot ensure that each user in the cell can obtain maximum signal energy. Therefore, beam management is introduced. A gNB separately performs beam management for various channels or signals based on different characteristics of the various channels or signals, and selects an optimal beam for a user, thereby improving coverage performance of the various channels or signals and user experience.

As shown in FIG. 2, a beam scanning technology in 5G NR may be divided into the following three phases:
In a phase P1, coarse alignment is performed. First, a network device omnidirectionally sends a synchronization signal block (synchronization signal block, SSB), and a terminal device performs scanning by using wide beams. After both the terminal device and the network device perform scanning, a narrow beam range of the network device and a wide beam of the terminal device are determined. Then, the terminal device sends a physical random access channel (physical random access channel, PRACH) to perform random access.

In a phase P2, the network device performs fine adjustment. After an RRC connection is established between the network device and the terminal device, the terminal device reports an optimal SSB measurement report by using a specific wide beam, and the network device performs, near the optimal beam, scanning by using narrow beams, to determine a narrow beam of the gNB.

In a phase P3, the network device fixes a beam, and then the terminal device performs scanning by using narrow beams, to determine a narrow beam of the terminal device. After the process P3 ends, both the terminal device and the network device use the narrow beams for alignment.

(2) Codebook. The codebook is a group of precoding matrices defined in a protocol. A network device obtains a precoding matrix V in two manners:
Manner 1: The network device estimates a downlink channel matrix H based on measurement of an uplink channel sounding reference signal (sounding reference signal, SRS) and reciprocity between uplink and downlink channels, to obtain V. However, this manner may be applied only to a time division duplex (time division duplex, TDD) system. The manner 1 is also referred to as SRS-based precoding.

Manner 2: A terminal estimates a channel matrix H based on measurement of a downlink reference signal, to obtain V, and then feeds back V to the network device. The manner 2 is also referred to as precoding matrix indication (precoding matrix indication, PMI)-based precoding.

For the manner 2, to reduce implementation complexity and feedback overheads, at present, a 3GPP protocol quantifiably defines a limited quantity of precoding matrices V, and a set of the limited quantity of precoding matrices may be referred to as a codebook. The precoding matrices in the codebook have corresponding numbers, and the terminal can indicate the precoding matrices only by feeding back these related numbers or parameters of the codebook.

Table 1 shows a codebook of a two-antenna port.

Table 1

| Index | Layer quantity | |
|-------|---|---|
| | 1 | 2 |
| 0 | $\frac{1}{\sqrt{2}}\begin{bmatrix}1\\1\end{bmatrix}$ | $\frac{1}{2}\begin{bmatrix}1 & 1\\1 & -1\end{bmatrix}$ |
| 1 | $\frac{1}{\sqrt{2}}\begin{bmatrix}1\\j\end{bmatrix}$ | $\frac{1}{2}\begin{bmatrix}1 & 1\\j & -j\end{bmatrix}$ |
| 2 | $\frac{1}{\sqrt{2}}\begin{bmatrix}1\\-1\end{bmatrix}$ | |
| 3 | $\frac{1}{\sqrt{2}}\begin{bmatrix}1\\-j\end{bmatrix}$ | |

From a perspective of a transmitter, after layer mapping and antenna port mapping, a network device performs weighting processing on data of each stream by using precoding matrices (alternatively referred to as weights or codebook weights) in a codebook, and then may form a directional beam on an antenna port through an orthogonal frequency division multiplexing (orthogonal frequency division multiplexing, OFDM) signal generator, to implement layer-to-beam-domain conversion. In other words, a data stream of each layer is carried on beams and transmitted in space.

Table 1 is used as an example. When the transport layer quantity is 1, a precoding matrix corresponding to an index 0 is $\frac{1}{\sqrt{2}}\begin{bmatrix} 1 \\ 1 \end{bmatrix}$.

(3) Reconfigurable intelligent meta-surface (reconfigurable intelligent meta-surface, RIS). The RIS is a digital reconfigurable artificial electromagnetic surface, and is an artificial composite structure (periodically or non-periodically) formed by a large quantity of sub-wavelength digital reconfigurable artificial electromagnetic units (or reflection elements) in a macro arrangement manner. Based on specific materials of reflection elements, RISs may be classified into an antenna-array-based structure and a metamaterial-surface-based structure. Phase shifts of all the reflection elements are adjusted, so that reflected signals can be configured to be propagated in their required directions. Due to rapid development of a metamaterial, a reflection coefficient of each element may be configured in real time to adapt to a dynamically fluctuating radio propagation environment.

Because basic units and an arrangement manner of the RIS can be arbitrarily designed, a limitation that a conventional material is difficult to accurately control at an atomic or molecular level can be broken through, to construct a supernormal medium parameter that cannot be implemented by the conventional material and a conventional technology, for example, a medium parameter that includes both a positive dielectric constant and a negative dielectric constant. A material having the supernormal medium parameter may be referred to as a superstructure material or a metamaterial. An electromagnetic wave is controlled by changing a spatial arrangement of digital coding units, to be specific, a characteristic of an electromagnetic field at a specific spatial location can be controlled by changing a state distribution of the basic units. Therefore, in some embodiments, the superstructure material may also be referred to as a digital electromagnetic metamaterial or an electromagnetic coding metamaterial.

The RIS may be installed on a large plane (for example, an indoor wall or ceiling, or an outdoor building or sign), to reflect radio frequency (radio frequency, RF) energy around an obstacle, and create a virtual line of sight (line of sight, LoS) propagation path between a communication source and a communication target.

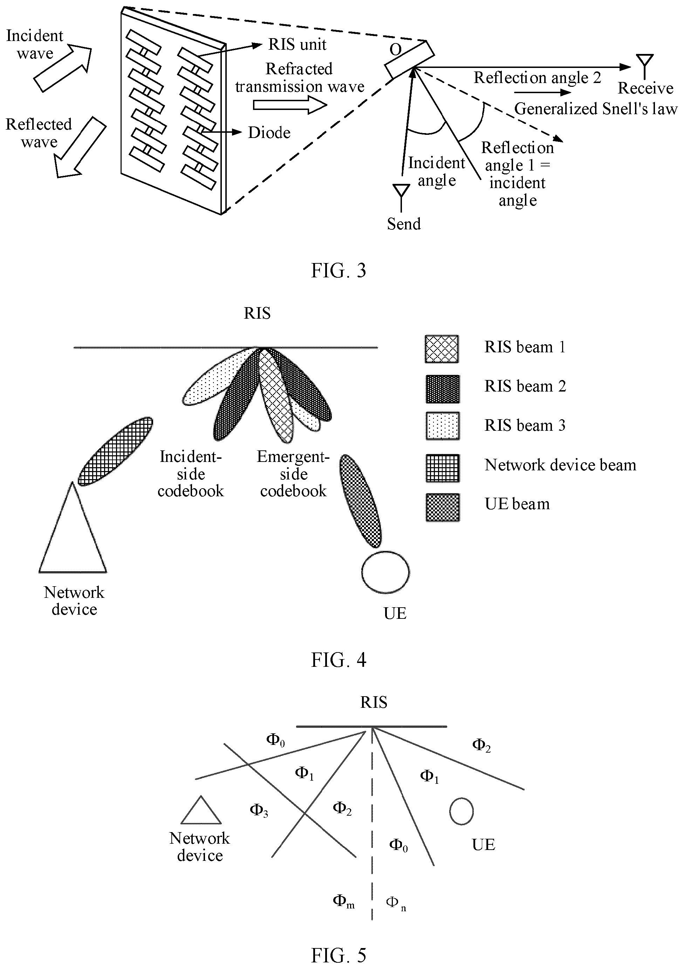

For example, FIG. 3 is a diagram of a working principle of a RIS module. As shown in FIG. 3, the RIS module includes a plurality of RIS units, and different RIS units are connected to each other through a diode, for example, a PIN diode or a variable capacitance diode. The RIS may reflect a received radio wave. It should be understood that, when a radio wave is propagated from a medium to another medium having a different refractive index, in addition to reflection, refraction also occurs. Therefore, the RIS can change a reflection phase difference of the radio wave. It may also be understood that the RIS enables the radio wave to follow the generalized Snell's law on a reflection or refraction interface. To be specific, the RIS can enable a reflection angle of the radio wave to be unequal to an incident angle. Compared with a conventional surface (the reflection angle of the radio wave is a reflection angle 1), the RIS can enable the reflection angle of the radio wave to be a reflection angle 2. In other words, compared with the conventional surface, the RIS has a capability to shape the radio wave according to the generalized Snell's law.

Specifically, a reflection coefficient of each RIS unit may be controlled by controlling the RIS unit to adjust an amplitude and/or a phase of a received signal. The adjusting, by the RIS unit, an amplitude and/or a phase of a received signal may also be considered as adjusting an amplitude and/or a phase of the RIS unit. It should be understood that, because all the RIS units have different reflection coefficients, the RIS units have different reflection angles or refraction angles for the radio wave. To be specific, a reflection angle or a refraction angle of the RIS for the radio wave may be adjusted by controlling the plurality of RIS units to respectively adjust amplitudes and/or phases of received signals, thereby collaboratively implementing fine three-dimensional (3D) passive beamforming for directional signal enhancement or null forming.

In some embodiments, an on/off state (an on state or an off state) of a PIN diode connected to a RIS unit may be controlled to control the RIS unit to adjust an amplitude and/or a phase of a received signal. For example, different bias voltages are applied to the PIN diode, to enable the PIN diode to be in an on state or an off state, so that the RIS unit connected to the PIN diode is enabled to be in an on state or an off state. The plurality of RIS units included in the RIS are in different states, and the RIS has different adjustment amounts for the amplitudes and/or the phases of the received signals, so that the RIS has different reflection coefficients. Therefore, statuses of the RIS units may be controlled to control the RIS module to adjust the amplitudes and/or the phases of the received signals, for example, enable a reflection phase difference of the RIS for the radio wave to be 180°, to control a reflection coefficient of the RIS, namely, a phase and/or an amplitude of the RIS. In this way, the reflection angle of the RIS for the radio wave can be unequal to the incident angle, to implement directional beamforming, thereby improving wireless network coverage and a system capacity. Therefore, the RIS can be widely used in communication systems. For example, in embodiments of this application, the RIS may be disposed in a source node and/or the RIS may be disposed in a coordination node, to implement coordinated communication through the RIS. The RIS has different reflection coefficients, and therefore has different reflection angles for the radio wave, resulting in different beam directions. Therefore, it may be considered that the reflection coefficient of the RIS may be used to adjust a beam direction of the RIS. From this perspective, the reflection coefficient of the RIS may also be referred to as a beamforming parameter of the RIS (this is used as an example below).

Optionally, the RIS may use an intelligent controller such as a programmable gate array (field programmable gate array, FPGA) to control the on/off state of the PIN diode. A working procedure of the RIS in a typical scenario may be as follows: A network device calculates an optimal reflection coefficient of the RIS, and then sends the optimal reflection coefficient to a controller of the RIS over a dedicated feedback link. A design of the reflection coefficient depends on channel state information (channel state information, CSI). The coefficient is updated only when the CSI changes, and has much longer duration than a data symbol. For example, one PIN photodiode is embedded in each reflection element in a RIS panel. A voltage is controlled through a bias line, so that the PIN photodiode can switch between "on" and "off" modes, thereby implementing a phase shift of a radian $\pi$.

Phase shifts of the reflection elements of the RIS are adjusted, so that a reflected signal and a signal from a direct path (or a direct link, namely, a path on which the signal is not reflected by the RIS) can be superimposed to enhance required signal power, or destructively combined to mitigate adverse impact of multi-user interference. Therefore, the RIS provides an additional degree of freedom, to further improve system performance, especially for millimeter wave (mmWave) communication. Usually, a penetration loss of a millimeter wave is very high, and a problem of a high loss cannot be easily resolved by using a large antenna array. When a direct link is blocked, the RIS may also be deployed to construct an auxiliary transmission link.

It may be understood that the amplitudes and/or the phases of the RIS units may be adjusted based on an indication of the network device. For example, the adjusting the amplitudes and/or the phases of the signals by the RIS is enabled to correspond to a plurality of precoding matrices in a codebook of the RIS. The network device may indicate an index of a precoding matrix in the codebook to the RIS. The RIS may determine, based on the indication of the network device, the precoding matrix having the index, and control the reflection coefficients of the RIS units by using amplitudes and/or phases corresponding to the precoding matrix, so that the RIS units implement signal reflection based on the indication of the network device. Subsequently, for ease of description, the codebook of the RIS is referred to as a concatenated codebook of the RIS.

It may be understood that, as shown in FIG. 4, when a RIS participates in signal transmission between a network device and a terminal device, an optimal precoding matrix is determined in a form of a single precoding matrix. Downlink signal sending is used as an example. In a beam scanning process of RIS-assisted communication, an emergent direction of the RIS is related to an emergent beam of the RIS, and is also related to an incident beam of the RIS. A combination of the incident beam and the emergent beam of the RIS corresponds to a precoding matrix in a concatenated codebook of the RIS, in other words, the precoding matrix determines the incident beam and the emergent beam that are used by the RIS. Optimal downlink signal transmission performance can be achieved only when the incident beam used by the RIS is aligned with a transmit beam of the network device and the emergent beam used by the RIS is aligned with a receive beam of the UE.

Therefore, to determine an optimal precoding matrix of the RIS, a set of all incident beams and all emergent beams of the RIS needs to be scanned, in other words, the RIS needs to scan all precoding matrices in the concatenated codebook. Consequently, beam scanning time of the RIS and a quantity of precoding matrices that need to be scanned greatly increase. For example, a quantity of incident beams and a quantity of emergent beams of the RIS are respectively M and N. In this case, for the RIS, the concatenated codebook of the RIS includes M×N precoding matrices. Therefore, to determine the optimal precoding matrix, actually, the RIS needs to perform precoding matrix switching (the RIS adjusts phases and/or amplitudes of RIS units based on amplitudes and/or phases corresponding to a precoding matrix) to perform I=M×N times of beam scanning. In each time of beam scanning, the RIS uses one precoding matrix in the codebook. If a quantity of scanning times is reduced, for example, only M precoding matrices in the concatenated codebook are scanned, accuracy of the optimal precoding matrix is reduced.

For example, if the optimal precoding matrix is determined based on a criterion of maximizing received power of the UE, the precoding matrix in the concatenated codebook of the RIS may be represented by the following formula:

$$\Phi_{opt} = \arg\max_{\Phi_i} \left| W_{BS} H \exp(j\Phi_i) F W_{UE} \right|.$$

$W_{BS}$ and $W_{UE}$ respectively represent precoding matrices respectively used by the network device and the terminal device, in other words, the network device and the UE may respectively use $W_{BS}$ and $W_{UE}$ when communicating through the RIS. H is a channel between the network device and the RIS. F is a channel between the RIS and the UE. $\exp(j\Phi_i)$ is an $i^{th}$ precoding matrix of the RIS, where i=1, 2, ..., I. To be specific, if a precoding matrix of the RIS is determined in a form of beam scanning, I precoding matrices of the RIS need to be traversed, to select a precoding matrix that is of the RIS and that maximizes the received power of the UE.

This application provides a communication method, to reduce a quantity of precoding matrix scanning times of a RIS.

In this application, based on decoupling of a codebook of a RIS, a concatenated codebook of the RIS is decoupled into an incident-side codebook and an emergent-side codebook. Therefore, a precoding matrix in the concatenated codebook of the RIS may be considered as a combination of an incident-side precoding matrix and an emergent-side precoding matrix. Alternatively, based on decoupling of a precoding matrix of a RIS, the precoding matrix of the RIS is decoupled into an incident-side precoding matrix and an emergent-side precoding matrix. The incident-side precoding matrix is included in an incident-side codebook, and the emergent-side precoding matrix is included in an emergent-side codebook.

In this application, in a sending process of a downlink signal, the incident-side codebook of the RIS is a network-device-side codebook of the RIS, and the emergent-side codebook of the RIS is a terminal-device-side codebook of the RIS. Similarly, in a sending process of an uplink signal, the incident-side codebook of the RIS is a terminal-device-side codebook of the RIS, and the emergent-side codebook of the RIS is a network-device-side codebook of the RIS. It may be understood that the incident-side codebook may be used to adjust a characteristic of a channel on an incident side of the RIS (or between a transmitter and the RIS), or the incident-side codebook may be used to be responsible for beamforming and scanning of an incident beam of the RIS. The emergent-side codebook may be used to adjust a characteristic of a channel on an emergent side of the RIS (or between the RIS and a receiver), or the emergent-side codebook may be used to be responsible for beamforming and scanning of an emergent beam of the RIS.

Optionally, in embodiments of this application, the codebook of the RIS may be decoupled from a perspective of spatial division.

Downlink communication is used as an example. FIG. 5 is a diagram of decoupling a codebook of a RIS from a perspective of spatial division. It may be learned that, a direction perpendicular to the RIS is used as a boundary, a precoding matrix $\Phi_{m,n}$ in a concatenated codebook of the RIS may be decoupled into an incident-side precoding matrix $\Phi_m$ and an emergent-side precoding matrix $\Phi_n$. An incident-side codebook and an emergent-side codebook each include a plurality of precoding matrices. $m$ and $n$ are respectively an index of an incident-side precoding matrix and an index of an emergent-side precoding matrix. For example, in FIG. 5, $\Phi_0$, $\Phi_1$, $\Phi_2$, and $\Phi_3$ on a network device side respectively represent incident-side precoding matrices whose m is 0, 1, 2, and 3, and $\Phi_0$, $\Phi_1$, and $\Phi_2$ on a terminal device side respectively represent emergent-side precoding matrices whose n=0, 1, and 2. It may be understood that each incident beam of the RIS corresponds to one precoding matrix in the incident-side codebook, and each emergent beam of the RIS corresponds to one precoding matrix in the emergent-side codebook.

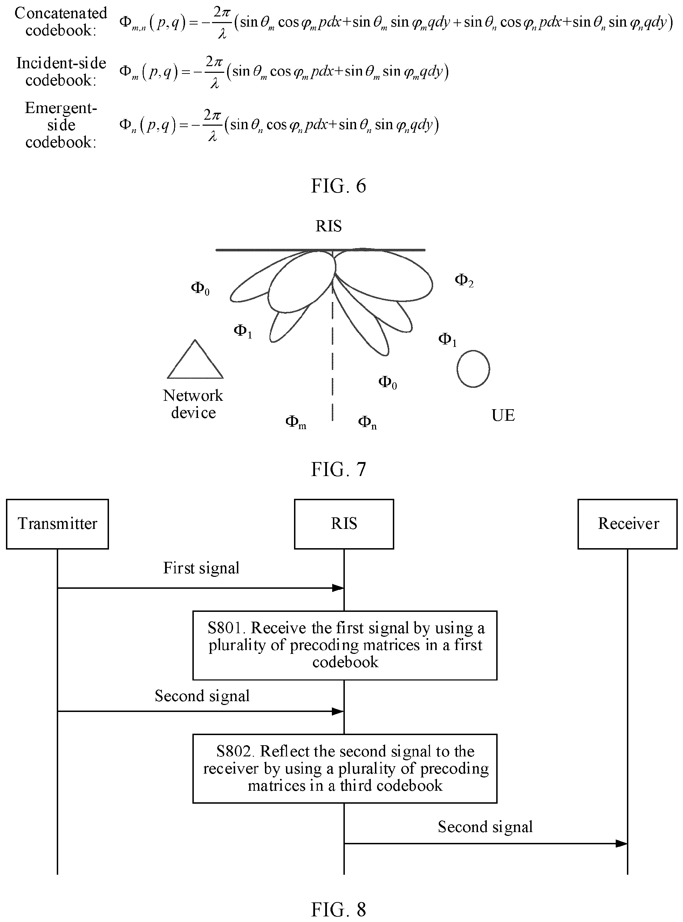

In addition, for example, a concatenated codebook of a RIS may alternatively be decomposed based on pitch angles and azimuths of an incident-side beam and an emergent-side beam of the RIS. For example, FIG. 6 shows respective relational expressions of a concatenated codebook $\Phi_{m,n}$ ($p, q$), a decoupled incident-side codebook $\Phi_m$ ($p, q$), and a decoupled emergent-side codebook $\Phi_n$ ($p, q$) of a RIS. $p$ and $q$ are indices of an element of the RIS in horizontal and vertical dimensions of an antenna array. $\theta$ and $\varphi$ respectively correspond to a pitch angle and an azimuth of a beam. $dx$ and $dy$ are distances between elements. $\lambda$ is a wavelength of a center frequency of the antenna array. $m$ and $n$ are respectively an index of an incident-side precoding matrix and an index of an emergent-side precoding matrix.

Optionally, a codebook of a RIS may be decoupled from a perspective of a wide/narrow beam.

Downlink communication is still used as an example. FIG. 7 is a diagram of decoupling a codebook of a RIS from a perspective of a wide/narrow beam. For example, a narrow beam may be changed into a wide beam through algorithm design, to cover a larger scanning range and reduce a quantity of scanning times. Correspondingly, a precoding matrix of the RIS may be decoupled into a combination of a precoding matrix corresponding to a wide beam and a precoding matrix corresponding to a wide beam, or a combination of a precoding matrix corresponding to a wide beam and a precoding matrix corresponding to a narrow beam. For example, decoupled codebooks of the RIS include a combination of at least two of an incident-side precoding matrix corresponding to a wide beam, an emergent-side precoding matrix corresponding to a narrow beam, an incident-side precoding matrix corresponding to a narrow beam, and an emergent-side precoding matrix corresponding to a wide beam. In FIG. 7, $m$ and $n$ are respectively an index of an incident-side precoding matrix and an index of an emergent-side precoding matrix. For example, in FIG. 5, $\Phi_0$, $\Phi_1$, and $\Phi_2$ on a network device side respectively represent incident-side precoding matrices whose m is 0, 1, and 2, and $\Phi_0$, $\Phi_1$, and $\Phi_2$ on a terminal device side respectively represent emergent-side precoding matrices whose n is 0, 1, 2 and 2. It may be learned that an incident-side precoding matrix $\Phi_1$ and an emergent-side precoding matrix $\Phi_2$ correspond to wide beams. Each incident beam corresponds to one precoding matrix in an incident-side codebook, and each emergent beam corresponds to one precoding matrix in an emergent-side codebook.

Optionally, a codebook of a RIS may be decoupled from a perspective of a discrete Fourier transform (discrete Fourier transform, DFT) beam. A DFT design is unrelated to an angle, and is related only to a quantity of antenna elements.

For example, both a decoupled incident-side codebook and a decoupled emergent-side codebook of the RIS are represented as follows:

$$\exp\left(-j\frac{2\pi nl}{N}\right) \otimes \exp\left(-j\frac{2\pi mk}{M}\right).$$

*N* and *M* are quantities of vertical and horizontal antennas. *n* and *m* are indices of vertical and horizontal beams. *l* and *k* are vertical and horizontal scaling factors. ⊗ represents a Kronecker product operation.

Based on the foregoing decoupling manner, the concatenated codebook of the RIS is decoupled into the incident-side codebook of the RIS and the emergent-side codebook of the RIS. For example, if the RIS has, in space, M incident beams and N emergent beams that need to be scanned, because both the incident beam and the emergent beam affect a channel between the network device and the UE, one incident beam and one emergent beam need to be used in each time of beam scanning, in other words, the RIS has a total of M×N beams that need to be scanned. After codebook decoupling, in a beam scanning process, the RIS may fixedly use one precoding matrix in the incident-side codebook, and scan N precoding matrices in the emergent-side codebook, to determine an optimal precoding matrix in the emergent-side codebook. In addition, the RIS may fixedly use one precoding matrix in the emergent-side codebook, and scan M precoding matrices in the incident-side codebook, to determine an optimal precoding matrix in the incident-side codebook. According to the decoupling manner, one precoding matrix in the concatenated codebook of the RIS is easily determined based on one precoding matrix in the incident-side codebook and one precoding matrix in the emergent-side codebook. Therefore, an optimal precoding matrix of the RIS can be determined based on the optimal precoding matrix in the incident-side codebook and the optimal precoding matrix in the emergent-side codebook. In this process, only M+N times of precoding matrix scanning are performed. Generally, a quantity of precoding matrices in the concatenated codebook of the RIS is far greater than 2. Therefore, in the method provided in embodiments of this application, a quantity of beam scanning times can be reduced from M×N to M+N, thereby reducing a quantity of precoding matrix scanning times of the RIS, and greatly shortening a scanning latency. In addition, in the communication method, accuracy of a process of determining an optimal precoding matrix is not reduced, to ensure communication performance.

The following describes in detail a communication method provided in embodiments of this application. Optionally, the communication method may be performed by a RIS and a network device. The RIS may be configured to receive a signal and/or reflect the signal to a receiver, where the signal may be from a transmitter. It may be understood that, in downlink communication, the network device is the transmitter, and a terminal device is the receiver. In uplink communication, the terminal device is the transmitter, and the network device is the receiver. The network device may be the transmitter or the receiver. If the transmitter is the network device, the receiver is the terminal device, and in this case, downlink communication is performed. If the transmitter is the terminal device, the receiver is the network device, and in this case, uplink communication is performed.

As shown in FIG. 8, a communication method provided in an embodiment of this application may include the following steps.

S801. A RIS receives a first signal from a transmitter by using a plurality of precoding matrices in a first codebook of the RIS.

In this application, that the RIS receives the signal by using the plurality of precoding matrices in the codebook indicates that the RIS changes phases and/or amplitudes of RIS units by using, in a polling manner, configurations that are of incident-side reflection elements and that correspond to the plurality of precoding matrices, and receives the signal by using the RIS units having different phases and/or amplitudes.

Channel measurement information corresponding to the first signal is used to determine a first precoding matrix. The plurality of precoding matrices in the first codebook that are used by the RIS to receive the first signal include the first precoding matrix.

In this application, the precoding matrix may also be replaced with a codebook weight or a weight. Therefore, the first precoding matrix may be replaced with a first weight. In this application, the precoding matrix of the RIS is a weight matrix corresponding to the adjustable phases and/or amplitudes of all the RIS units in the RIS device. Therefore, when different precoding matrices are used, the RIS units of the RIS have different phases and/or amplitudes. The RIS may adjust the phases and/or the amplitudes of the RIS units by using a configuration that is of the reflection elements and that corresponds to the precoding matrix. It may be understood that the RIS may change a precoding matrix used when a signal is received or reflected, to change an amplitude, a phase, a rank, or another characteristic of a radio channel.

The first codebook in this application may be used to adjust a characteristic of a channel between the transmitter and the RIS. Therefore, the first codebook is an incident-side codebook of the RIS. In addition, a second codebook is used to adjust a characteristic of a channel between the RIS and a receiver. Therefore, the second codebook is an emergent-side codebook of the RIS. Optionally, the first codebook and/or the second codebook may be indicated by a network device, may be determined based on decoupling of a third codebook, or may be defined in a protocol, preconfigured, or predefined. This is not specifically required in this application. The third codebook may be used to adjust a characteristic of a channel between the transmitter, the RIS, and the receiver. Therefore, the third codebook is a concatenated codebook of the RIS. Based on a decoupling principle of the third codebook of the RIS, in this application, a precoding matrix in the first codebook is a precoding matrix used to change a phase and/or an amplitude of a signal between the transmitter and the RIS, a precoding matrix in the second codebook is a precoding matrix used to change a phase and/or an amplitude of a signal between the RIS and the receiver, and the third codebook is a combination of the precoding matrices in the first codebook and precoding matrices in the second codebook and may be used to change the phase and/or the amplitude of the signal between the transmitter and the RIS and the phase and/or the amplitude of the signal between the RIS and the receiver.

For example, the third codebook may be decoupled to obtain the first codebook and the second codebook. For a decoupling manner, refer to the descriptions of decoupling of the concatenated codebook of the RIS in this application. Details are not described herein again. It may be understood that, in this application, one precoding matrix in the first codebook and one precoding matrix in the second codebook of the RIS correspond to one precoding matrix in the third codebook of the RIS. Optionally, one precoding matrix in the third codebook may be decoupled to obtain one precoding matrix in the first codebook and one precoding matrix in the second codebook, and/or one precoding matrix in the first codebook and one precoding matrix in the second codebook may be combined to obtain one precoding matrix in the third codebook. For example, any precoding matrix in the third codebook is a product of one precoding matrix in the first codebook and one precoding matrix in the second codebook.

For example, a precoding matrix whose index is 0 in the third codebook is obtained by combining a precoding matrix whose index is 0 in the first codebook and a precoding matrix whose index is 0 in the second codebook, or a precoding matrix whose index is 0 in the third codebook may be decoupled into a precoding matrix whose index is 0 in the first codebook and a precoding matrix whose index is 0 in the second codebook; a precoding matrix whose index is 1 in the third codebook is obtained by combining the precoding matrix whose index is 0 in the first codebook and a precoding matrix whose index is 1 in the second codebook, or a precoding matrix whose index is 0 in the third codebook may be decoupled into the precoding matrix whose index is 0 in the first codebook and a precoding matrix whose index is 1 in the second codebook; a precoding matrix whose index is 1 in the third codebook is obtained by combining a precoding matrix whose index is 1 in the first codebook and the precoding matrix whose index is 0 in the second codebook, or a precoding matrix whose index is 1 in the third codebook is obtained by combining the precoding matrix whose index is 0 in the first codebook and the precoding matrix whose index is 1 in the second codebook; and so on.

In this application, the first precoding matrix may be determined based on the channel measurement information corresponding to the first signal. The RIS may receive the first signal and measure the first signal to obtain the channel measurement information corresponding to the first signal. Optionally, the channel measurement information may include CSI.

For example, the channel measurement information corresponding to the first signal may include channel measurement results obtained by receiving the first signal by using the plurality of precoding matrices, for example, reference signal received power (reference signal received power, RSRP) or signal to interference plus noise ratios (signal to interference plus noise ratio, SINR).

In addition, the channel measurement information corresponding to the first signal may include time or sequence indication information of a precoding matrix that has optimal channel quality and that is determined based on the channel measurement results (time of the precoding matrix having the optimal channel quality is referred to as time indication information below, and the sequence indication information of the precoding matrix having the optimal channel quality is referred to as sequence indication information below). To reduce overheads, in this case, the channel measurement information may not include the channel measurement results, or may include only a channel measurement result of the precoding matrix having the optimal channel quality.

It may be understood that, because the RIS receives or reflects a signal by using a plurality of precoding matrices, channel measurement results corresponding to the signal may include a plurality of channel measurement values. The plurality of channel measurement values may correspond to different time (or time units), and time corresponding to a channel measurement value is time at which the RIS uses a precoding matrix corresponding to the channel measurement value.

The time indication information may include, for example, an index of a time unit corresponding to the channel measurement result. In this application, the time unit may include a slot, a symbol, or another time length. This is not specifically limited.

The sequence indication information may include a time sequence of the corresponding channel measurement result in the plurality of channel measurement results corresponding to the first signal.

The RSRP is used as an example. RSRP of received signals of the first signal may be numbered in a time sequence in which the RIS uses the precoding matrices, and a number of optimal RSRP is used as the channel measurement information corresponding to the first signal. For example, if the RIS uses five precoding matrices in a polling manner, the channel measurement results may include five RSRP values. The five RSRP values are respectively numbered from 1 to 5 in a time sequence. If RSRP numbered 1 is optimal, the sequence indication information is the number 1. In addition, the time indication information may include a slot number corresponding to the optimal RSRP.

Optionally, the channel measurement information corresponding to the first signal may further include a channel quality indication (channel quality indication, CQI) of the optimal channel quality, or another channel parameter.

When the RIS uses different precoding matrices in the first codebook, the amplitudes and/or the phases of the RIS units of the RIS are differently adjusted. Therefore, when the RIS uses different precoding matrices, the channel measurement information of the received first signal changes, and consequently the channel changes when the first signal arrives at the RIS. In other words, the channel measurement information corresponding to the first signal changes. Therefore, the precoding matrix (the first precoding matrix) that enables the optimal channel quality in the first codebook of the RIS may be determined based on the channel measurement information corresponding to the first signal, to improve incident-side channel quality of the RIS.

In a possible implementation, if the RIS has a capability to perform signal measurement and determine the optimal precoding matrix based on the channel measurement information, after the RIS receives the first signal, the RIS may determine, through signal measurement, the channel measurement information corresponding to the first signal. For example, the RIS may obtain, through channel measurement, channel measurement results of the first signal in a case in which different precoding matrices in the first codebook are used, or determine the time indication information or the sequence indication information based on the channel measurement results. Further, the RIS may further select, as the first precoding matrix based on the channel measurement information corresponding to the first signal, the precoding matrix having the optimal channel quality in the plurality of precoding matrices.

In addition, optionally, the RIS may further send indication information of the first precoding matrix to the network device (for example, the transmitter or the receiver). In this application, the indication information of the precoding matrix may include an index of the precoding matrix in the codebook. In addition, the indication information of the precoding matrix may alternatively include an index of a beam corresponding to the precoding matrix. A mapping relationship between the precoding matrix and the beam may be indicated by the network device or the RIS, or may be determined through protocol definition, preconfiguration, or predefinition.

In another possible implementation, the RIS may send the channel measurement information corresponding to the first signal to the network device (for example, the transmitter or the receiver), and the network device determines the first precoding matrix from the plurality of precoding matrices in the first codebook based on the channel measurement information corresponding to the first signal and information about the plurality of precoding matrices in the first codebook that are used when the RIS receives the first signal.

Optionally, the information about the precoding matrices used when the RIS receives the first signal may include respective indication information (for example, indices) of the plurality of precoding matrices used when the RIS receives the first signal, or include use time (for example, slot) or sequence information of the plurality of precoding matrices.

In this application, the RIS may send, to the network device, the information about the precoding matrices used when the RIS receives the first signal. To be specific, after the RIS determines the plurality of precoding matrices used when the first signal is received, and/or determines time or a sequence of the used plurality of precoding matrices, the RIS performs indication to the network device. Alternatively, the network device may send, to the RIS, the information about the precoding matrices used when the RIS receives the first signal. To be specific, after the network device determines the plurality of precoding matrices used when the RIS receives the first signal, and/or determines time or a sequence of the used plurality of precoding matrices, the network device performs indication to the RIS. In addition, the information about the precoding matrices used for the first signal may alternatively be defined in a protocol or determined through preconfiguration or predefinition. For example, the plurality of precoding matrices are all precoding matrices in the first codebook by default, and a use sequence of the plurality of precoding matrices is related to index values of the precoding matrices.

Optionally, before S801, the network device may further send first indication information to the RIS. The first indication information may indicate the RIS to receive the first signal by using the plurality of precoding matrices in the first codebook. Optionally, the first indication information may include the information about the precoding matrices used when the RIS receives the first signal. Therefore, the network device learns of the information about the precoding matrices used when the RIS receives the first signal.

For example, the channel measurement results include the RSRP. When the channel measurement information corresponding to the first signal includes the channel measurement results, the network device may determine optimal RSRP based on the RSRP corresponding to the first signal, where the optimal RSRP is RSRP obtained when the RIS receives the first signal by using an $x^{th}$ precoding matrix in a time sequence. Based on the information about the precoding matrices used when the RIS receives the first signal, the network device may learn of the indices of the precoding matrices in the first codebook that are used by the RIS to receive the first signal, and learn of the time or the sequence of the precoding matrices of the RIS, and therefore may learn of an index of the $x^{th}$ precoding matrix used by the RIS in the time sequence in the first codebook, in other words, determine the first precoding matrix. x is a positive integer.

When the channel measurement information corresponding to the first signal includes the sequence indication information, the precoding matrices used when the RIS receives the first signal are precoding matrices whose indices are 0, 1, 2, 3, and 4 in the first codebook, and a use time sequence of the five precoding matrices is 5, 4, 3, 2, and 1, to be specific, the RIS uses the five precoding matrices in descending order of the indices to receive the first signal. Correspondingly, after obtaining the RSRP of the first signal through measurement, the RSI sends, to the network device, the sequence indication information determined based on the RSRP. The network device receives the sequence indication information, and determines, based on the sequence indication information, the first precoding matrix from the precoding matrices whose indices are 0, 1, 2, 3, and 4 in the first codebook. To reduce overheads, only a time sequence number of channel measurement information having the optimal channel quality needs to be fed back by using the sequence indication information. The time sequence number is, for example, n, indicating that channel quality is optimal when the RIS uses an $n^{th}$ precoding matrix in the five precoding matrices, where n=1, 2, 3, 4, or 5. For example, if RSRP obtained by the RIS by receiving the first signal by using a precoding matrix whose index is 0 is optimal, the channel quality information of the first signal may include the sequence indication information, and a value of the sequence indication information is 5. In this case, the network device may determine, as the first precoding matrix, the precoding matrix whose index is 0.

Optionally, after the network device determines the first precoding matrix, the network device may further send indication information of the first precoding matrix to the RIS, so that the RIS learns of the first precoding matrix.

Based on S801, the RIS and/or the network device may determine an incident-side weight of the RIS, to be specific, determine the first precoding matrix. It may be understood that, when the RIS receives the signal from the transmitter by using the first precoding matrix, quality of the channel between the transmitter and the RIS is optimal.

S802. The RIS reflects a second signal to the receiver by using a plurality of precoding matrices in the third codebook, where the second signal is from the transmitter.

In this application, that the RIS reflects the signal to the receiver by using the plurality of precoding matrices in the third codebook indicates that the RIS changes the phases and/or the amplitudes of the RIS units by using, in a polling manner, configurations that are of reflection elements and that correspond to the plurality of precoding matrices, and reflects the signal from the transmitter to the receiver by using the RIS units having different phases and/or amplitudes of the RIS units.

Channel measurement information corresponding to the second signal is used to determine a second precoding matrix, and the second precoding matrix belongs to the second codebook. It may be understood that the plurality of precoding matrices in the third codebook that are used when the RIS reflects the second signal correspond to the first precoding matrix and the plurality of precoding matrices in the second codebook, and the plurality of precoding matrices in the second codebook include the second precoding matrix.

Optionally, the plurality of precoding matrices in the third codebook may be determined based on the first precoding matrix. As described above, any precoding matrix in the third codebook may be decoupled into one precoding matrix in the first codebook and one precoding matrix in the second codebook. In S802, a precoding matrix that is in the first codebook and that is obtained after the plurality of precoding matrices in the third codebook are decoupled is the first precoding matrix, or the plurality of precoding matrices in the third codebook are obtained by separately combining the first precoding matrix with the plurality of precoding matrices in the second codebook.

It may be understood that, after the first precoding matrix is determined in S801, in S802, the RIS may reflect the second signal by using the plurality of precoding matrices in the third codebook in a polling manner. Because the plurality of precoding matrices all correspond to the first precoding matrix and correspond to the plurality of precoding matrices in the second codebook, the second precoding matrix may be determined based on the channel measurement information corresponding to the second signal, and the second precoding matrix is included in the plurality of precoding matrices in the second codebook.

The channel measurement information corresponding to the second signal reflects only a change of the channel between the RIS and the receiver, and the change of the channel is caused by the RIS by reflecting the second signal by using different precoding matrices in the third codebook. Specifically, the plurality of precoding matrices in the third codebook correspond to one precoding matrix (the first precoding matrix) in the first codebook and the plurality of precoding matrices in the second codebook. Therefore, incident-side phases and amplitudes of the RIS that correspond to the plurality of precoding matrices remain unchanged. Therefore, the channel between the transmitter and the RIS does not change because the RIS uses phase and/or amplitude parameters corresponding to different precoding matrices in the first codebook. However, the channel between the RIS and the receiver changes because the RIS separately uses phase and/or amplitude parameters corresponding to the plurality of precoding matrices in the second codebook, in other words, the change of the channel is caused by a change of an emergent-side precoding matrix (or a phase and/or amplitude parameter) of the RIS. Therefore, the channel measurement information corresponding to the second signal can determine an emergent-side precoding matrix (or a phase and/or amplitude parameter) that is of the RIS and that enables optimal quality of the channel between the RIS and the receiver.

For the channel measurement information corresponding to the second signal, refer to the descriptions of the channel measurement information corresponding to the first signal in S801. For example, the channel measurement information corresponding to the second signal may include channel measurement results corresponding to the second signal, or include time indication information or sequence indication information determined based on the channel measurement results corresponding to the second signal.

In this application, the receiver may determine the channel measurement information corresponding to the second signal. For example, in downlink communication, a terminal device may receive the second signal reflected by the RIS, and determine the channel measurement information corresponding to the second signal. In uplink communication, the network device may receive the second signal reflected by the RIS, and determine the channel measurement information corresponding to the second signal.

For example, the receiver may receive the second signal, and obtain, through measurement, the channel measurement information corresponding to the second signal.

Optionally, the receiver or the transmitter may further determine the second precoding matrix based on the channel measurement information corresponding to the second signal. For example, the receiver determines the second precoding matrix from the plurality of precoding matrices in the second codebook based on the channel measurement information corresponding to the second signal and information about the plurality of precoding matrices in the second codebook. The plurality of precoding matrices in the second codebook and the first precoding matrix correspond to the plurality of precoding matrices in the third codebook. For another example, the receiver may send the channel measurement information corresponding to the second signal to the transmitter, so that the transmitter determines the second precoding matrix from the plurality of precoding matrices in the second codebook based on the channel measurement information corresponding to the second signal and information about the plurality of precoding matrices in the second codebook.

The following describes the information about the plurality of precoding matrices in the second codebook with reference to Table 2.

For example, an index of the first precoding matrix in the first codebook is 0, and respective indication information of the plurality of precoding matrices in the second codebook includes indices of the plurality of precoding matrices in the second codebook, where the indices are 0, 1, 2, 3, and 4 respectively. The precoding matrices whose indices are 0, 1, 2, 3, and 4 respectively correspond to precoding matrices whose indices are 10, 9, 8, 7, and 6 in the third codebook. A sequence in which the RIS uses the precoding matrices whose indices are 10, 9, 8, 7, and 6 in the third codebook to reflect the second signal is 5, 4, 3, 2, and 1. Optionally, in this example, a correspondence between the index of the first precoding matrix, the indices of the plurality of precoding matrices in the second codebook, the indices of the plurality of precoding matrices in the third codebook, and use sequence information is shown in Table 2.

Table 2

| 1 | Index of the first precoding matrix in the first codebook | 0 | | | | |
|---|---|---|---|---|---|---|
| 2 | Indices of the plurality of precoding matrices in the second codebook | 0 | 1 | 2 | 3 | 4 |
| 3 | Indices of the plurality of precoding matrices in the third codebook | 10 | 9 | 8 | 7 | 6 |
| 4 | Use sequence numbers | 1 | 2 | 3 | 4 | 5 |

Optionally, the information about the plurality of precoding matrices in the second codebook may include the respective indication information (for example, the indices) of the plurality of precoding matrices in the second codebook, for example, content in the second row shown in Table 2.

The information about the plurality of precoding matrices in the second codebook may further include indication information (for example, the indices) of the precoding matrices in the third codebook that correspond to the first precoding matrix and the plurality of precoding matrices in the second codebook, for example, content in the third row in Table 2.

The information about the plurality of precoding matrices in the second codebook may further include a correspondence between the first precoding matrix, the plurality of precoding matrices in the second codebook, and the plurality of precoding matrices in the third codebook, for example, content in the first row to the third row in Table 2, or include content in the second row and the third row, to represent a correspondence between the plurality of precoding matrices in the second codebook and the plurality of precoding matrices in the third codebook.

The information about the plurality of precoding matrices in the second codebook may further include use time information or use sequence information corresponding to the plurality of precoding matrices in the second codebook. The use sequence information is used as an example. The use sequence information may indicate a correspondence between the indices of the plurality of precoding matrices in the second codebook and the use sequence numbers, for example, include content in the second row and the fourth row in Table 2, to indicate use sequence numbers of the precoding matrices in the second codebook. For another example, the use sequence information may include content in the third row and the fourth row, to indicate a correspondence between the indices of the plurality of precoding matrices in the third codebook and the use sequence numbers, or include content in the second row to the fourth row.

In addition, the information about the plurality of precoding matrices in the second codebook may further include a correspondence between the first precoding matrix and the plurality of precoding matrices in the second codebook, for example, content in the first row and the second row shown in Table 2.

Optionally, the use time information may be indices of time units in which the precoding matrices in the third codebook are used when the RIS reflects the second signal. For example, the use sequence numbers in Table 2 may be replaced with time unit indices, or a row is added to Table 2 to carry the time unit indices. The use sequence information may be determined based on the use time information.

For example, the information about the plurality of precoding matrices in the second codebook may include content in the first row to the fourth row in Table 2, include the content in the second row to the fourth row in Table 2, include the content in the second row and the third row, or include the content in the third row and the fourth row. No more examples are provided.

For example, the information about the plurality of precoding matrices in the second codebook includes the content in the second row and the fourth row in Table 2. After sequence indication information of an optimal precoding matrix in the third codebook is determined based on the channel measurement information corresponding to the second signal, a precoding matrix that is in the second codebook and that corresponds to the optimal precoding matrix in the third codebook may be determined based on the content in the second row and the fourth row. The precoding matrix is the second precoding matrix.

In this application, the RIS may send the information about the plurality of precoding matrices in the second codebook to the network device. To be specific, after the RIS determines the plurality of precoding matrices used to reflect the second signal, and/or determines time or a sequence of the used plurality of precoding matrices, the RIS performs indication to the network device. Alternatively, the network device may send the information about the plurality of precoding matrices in the second codebook of the RIS to the RIS. To be specific, after the network device determines the plurality of precoding matrices used by the RIS to reflect the second signal, and/or determines time or a sequence of the used plurality of precoding matrices, the network device performs indication to the RIS. In addition, the information about the plurality of precoding matrices in the second codebook may alternatively be defined in a protocol or determined through preconfiguration or predefinition. For example, the plurality of precoding matrices are all precoding matrices in the second codebook by default, and a use sequence of the plurality of precoding matrices in the second codebook is related to index values of the precoding matrices.

Optionally, before S802, the network device may further send second indication information to the RIS. The second indication information may indicate the RIS to reflect the second signal by using the plurality of precoding matrices in the third codebook. Optionally, the second indication information may include the information about the plurality of precoding matrices in the second codebook. The information about the plurality of precoding matrices in the second codebook and the first precoding matrix correspond to the plurality of precoding matrices in the third codebook. Therefore, the network device learns of the information about the plurality of precoding matrices in the second codebook. Alternatively, the second indication information may include the indication information of the plurality of precoding matrices in the second codebook.

For example, the second indication information may include the indication information of the first precoding matrix and/or the indication information of the plurality of precoding matrices in the second codebook. The RIS determines the plurality of precoding matrices in the third codebook based on the indication information of the first precoding matrix and the indication information of the plurality of precoding matrices in the second codebook. Therefore, the RIS does not need to configure all the precoding matrices in the third codebook in advance, provided that the RIS can determine the precoding matrices in the third codebook based on the precoding matrices in the first codebook and the precoding matrices in the second codebook. For example, the RIS can determine the precoding matrices in the third codebook based on the precoding matrices in the first codebook and the precoding matrices in the second codebook through table lookup, calculation, or the like. Optionally, the plurality of precoding matrices in the second codebook may be preconfigured, predefined, or defined in a protocol, for example, all the precoding matrices in the second codebook. Alternatively, the indication information of the first precoding matrix may be sent independently of the second indication information. This is not specifically limited.

In addition, the second indication information may further include the indication information of the plurality of precoding matrices in the third codebook. Therefore, the RIS does not need to perform processing, so that processing complexity of the RIS can be reduced.

As a possible implementation of determining the second precoding matrix, when the receiver includes the network device, the network device may obtain the information about the plurality of precoding matrices in the second codebook. In addition, when the receiver includes the terminal device, the terminal device may obtain the information about the plurality of precoding matrices in the second codebook from the network device.

For example, the channel measurement results include RSRP. When the channel measurement information corresponding to the second signal includes the channel measurement results, the receiver may determine, based on the RSRP corresponding to the second signal, that optimal RSRP is RSRP obtained when the RIS reflects the second signal by using a $y^{th}$ precoding matrix in the third codebook in a time sequence. Further, according to the content in the second row to the fourth row in Table 2, the receiver may determine an index of a precoding matrix that is in the second codebook and that corresponds to the $y^{th}$ precoding matrix that is in the third codebook and that is used in the time sequence, to determine, as the second precoding matrix, the precoding matrix having the index in the second precoding matrix.

Similarly, when the channel measurement information corresponding to the first signal includes the sequence indication information, and the sequence indication information indicates y, it indicates that RSRP obtained when the RIS reflects the second signal by using a $y^{th}$ precoding matrix in the third codebook in a time sequence is optimal RSRP.

Further, according to the content in the second row to the fourth row in Table 2, the receiver may determine an index of a precoding matrix that is in the second codebook and that corresponds to the $y^{th}$ precoding matrix that is in the third codebook and that is used in the time sequence, to determine, as the second precoding matrix, the precoding matrix having the index in the second precoding matrix.

In another possible implementation of determining the second precoding matrix, optionally, when the receiver includes the terminal device, the terminal device may send the channel measurement information corresponding to the second signal to the network device (the transmitter), so that the network device determines the second precoding matrix based on the channel measurement information corresponding to the second signal and the information about the plurality of precoding matrices in the second codebook. For a manner in which the network device determines the second precoding matrix based on the channel measurement information corresponding to the second signal and the information about the plurality of precoding matrices in the second codebook, refer to the manner in which the network device determines the second precoding matrix when the network device is used as the receiver. Details are not described again.

In another possible implementation of determining the second precoding matrix, optionally, when the receiver includes the terminal device, the network device (the transmitter) or the RIS may send the information about the plurality of precoding matrices in the second codebook to the terminal device, so that the terminal device may determine the second precoding matrix based on the channel measurement information corresponding to the second signal and the information about the plurality of precoding matrices in the second codebook. For a manner in which the terminal device determines the second precoding matrix based on the channel measurement information corresponding to the second signal and the information about the plurality of precoding matrices in the second codebook, refer to the manner in which the network device determines the second precoding matrix when the network device is used as the receiver. Details are not described again.

In another possible implementation of determining the second precoding matrix, the receiver may send the channel measurement information corresponding to the second signal to the RIS, so that the RIS determines the second precoding matrix based on the channel measurement information corresponding to the second signal and the information about the plurality of precoding matrices in the second codebook. For a manner in which the RIS determines the second precoding matrix based on the channel measurement information corresponding to the second signal and the information about the plurality of precoding matrices in the second codebook, refer to the manner in which the network device determines the second precoding matrix when the network device is used as the receiver. Details are not described again.

Therefore, in this application, the receiver, the transmitter, or the RIS may determine the second precoding matrix based on the channel measurement information corresponding to the second signal. If the receiver or the transmitter determines the second precoding matrix, the receiver or the transmitter may send indication information of the second precoding matrix to the RIS, so that the RIS may determine the second precoding matrix based on the indication information of the second precoding matrix from the receiver or the transmitter. Alternatively, the terminal device, the network device, or the RIS may determine the second precoding matrix based on the channel measurement information corresponding to the second signal. If the terminal device or the network device determines the second precoding matrix, the terminal device or the network device further sends indication information of the second precoding matrix to the RIS, so that the RIS may determine the second precoding matrix based on the indication information of the second precoding matrix from the terminal device or the network device.

Based on the procedure shown in FIG. 8, the RIS may receive the first signal and reflect the second signal. The channel measurement information corresponding to the first signal and the channel measurement information of the second signal may be respectively used to determine the first precoding matrix and the second precoding matrix. The first precoding matrix and the second precoding matrix correspond to a third precoding matrix in the third codebook. Therefore, the precoding matrix in the third codebook of the RIS can be determined.

A manner of determining the third precoding matrix based on the first precoding matrix and the second precoding matrix corresponds to a manner of decoupling the third codebook to obtain the first codebook and the second codebook. Optionally, the third precoding matrix may be obtained by multiplying the first precoding matrix by the second precoding matrix. In addition, for the decoupling manner shown in FIG. 6, the third precoding matrix may alternatively be obtained by adding the first precoding matrix to the second precoding matrix.

Optionally, in this application, the third codebook does not need to be configured in the RIS, provided that the RIS determines the third precoding matrix based on the first precoding matrix and the second precoding matrix after learning of the first precoding matrix and the second precoding matrix.

It may be understood that the procedure shown in FIG. 8 may further include: the RIS sends codebook information of the RIS to the network device. The codebook information of the RIS includes but is not limited to at least one of the first codebook, the second codebook, and the third codebook of the RIS, information about the manner of decoupling the third codebook to obtain the first codebook and the second codebook, and a beam scanning range corresponding to precoding matrices. The beam scanning range may indicate a maximum beam coverage range obtained after the RIS configures all precoding matrices. The beam scanning range is, for example, horizontal 120 degrees and vertical 60 degrees.

Optionally, before S801, the network device may send configuration information to at least one of the RIS, the transmitter, or the receiver, to configure the RIS to perform the method shown in FIG. 8. Alternatively, the RIS may be configured, through preconfiguration, predefinition, protocol definition, or the like, to perform the method shown in FIG. 8.

In addition, before S801, the transmitter may use a beam aligned with the RIS, for example, use a beam whose beam direction is aligned with a location of the RIS. For example, a transmit codebook of the transmitter includes a plurality of precoding matrices, and the transmitter may send a signal (including but not limited to the first signal or the second signal) to the RIS by using a precoding matrix having optimal quality of the channel between the transmitter and the RIS. Alternatively, in the procedure shown in FIG. 8, the transmitter may use any precoding matrix in the transmit codebook, and determine an optimal precoding matrix in the transmit codebook of the transmitter after determining the first precoding matrix and/or the second precoding matrix in the procedure shown in FIG. 8. Similarly, before S802, the receiver may receive a signal (including but not limited to the first signal or the second signal) by using a beam aligned with the RIS, or after the procedure shown in FIG. 8, the receiver may receive a signal by using any precoding matrix in a receive codebook of the receiver.

The following uses uplink communication and downlink communication as examples to describe possible implementations based on the procedure shown in FIG. 8.

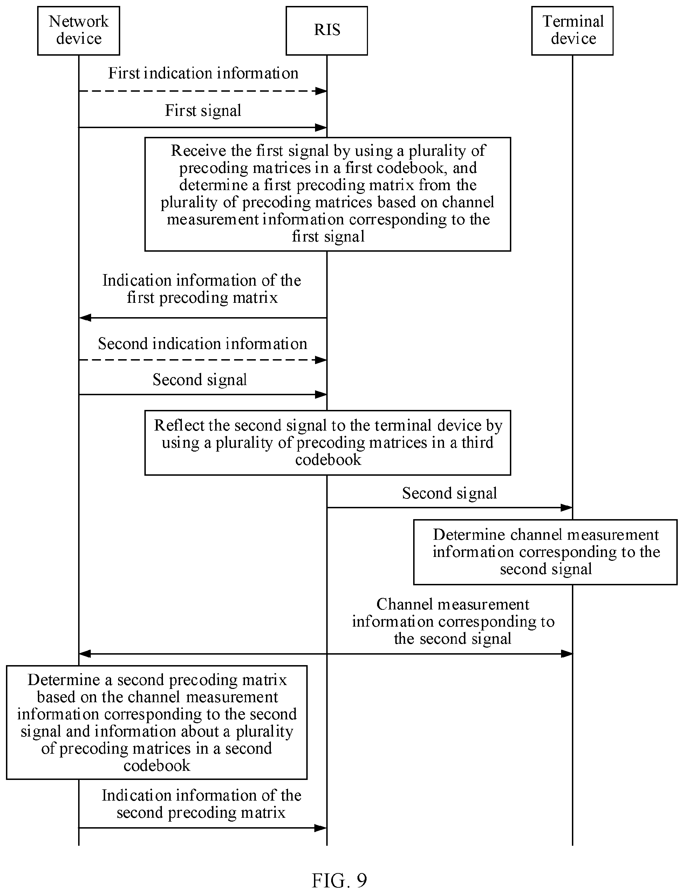

As shown in FIG. 9, in downlink communication, a transmitter is a network device, and a receiver is a terminal device. When a RIS has a channel measurement capability, the network device may send first indication information to the RIS, to indicate the RIS to receive a first signal by using a plurality of precoding matrices in a first codebook (a network-device-side codebook of the RIS). The network device may further send the first signal to the RIS. The RIS receives the first signal by using the plurality of precoding matrices in the first codebook, and determines a first precoding matrix from the plurality of precoding matrices based on channel measurement information corresponding to the first signal. The RIS may further send indication information of the first precoding matrix to the network device. Correspondingly, the network device may determine the first precoding matrix based on the indication information. Further, after determining the first precoding matrix, the network device may determine a plurality of precoding matrices in a third codebook (a concatenated codebook of the RIS) based on the first precoding matrix. The plurality of precoding matrices correspond to the first precoding matrix and a plurality of precoding matrices in a second codebook (a terminal-device-side codebook of the RIS). The network device may further send second indication information, to indicate the RIS to receive the first signal by using the plurality of precoding matrices in the third codebook. The plurality of precoding matrices correspond to the first precoding matrix and the plurality of precoding matrices in the second codebook. The network device may further send the second signal to the RIS. The RIS reflects the second signal to the terminal device by using the plurality of precoding matrices in the third codebook. The terminal device receives the second signal, and determines channel measurement information corresponding to the second signal. The terminal device sends the channel measurement information corresponding to the second signal to the network device. The network device determines a second precoding matrix based on the channel measurement information corresponding to the second signal and information about the plurality of precoding matrices in the second codebook. For example, the information about the plurality of precoding matrices in the second codebook may include the content shown in Table 2. The network device may further send indication information of the second precoding matrix to the RIS. Correspondingly, the RIS may determine the second precoding matrix based on the indication information. The network device may further send the indication information of the first precoding matrix and the indication information of the second precoding matrix to the RIS, to indicate the RIS to transmit a signal between the network device and the terminal device by using a precoding matrix (a third precoding matrix) corresponding to the first precoding matrix and the second precoding matrix.

In addition, optionally, the network device may further send control information to the RIS, to indicate time or a sequence of using the plurality of precoding matrices in the first codebook when the RIS receives the first signal. Optionally, the network device may further send, to the RIS, indication information of a time-frequency resource occupied by the first signal. The RIS may determine, based on the indication information, the time-frequency resource occupied by the first signal, to receive the first signal based on the time-frequency resource.

Optionally, before sending the second signal, the network device may send control information to the RIS, to indicate time or a sequence of using the plurality of precoding matrices in the third codebook when the RIS reflects the second signal. Optionally, the network device may further send, to the RIS, indication information of a time-frequency resource occupied by the second signal. The RIS may determine, based on the indication information, the indication information of the time-frequency resource occupied by the second signal, to reflect the second signal based on the time-frequency resource.

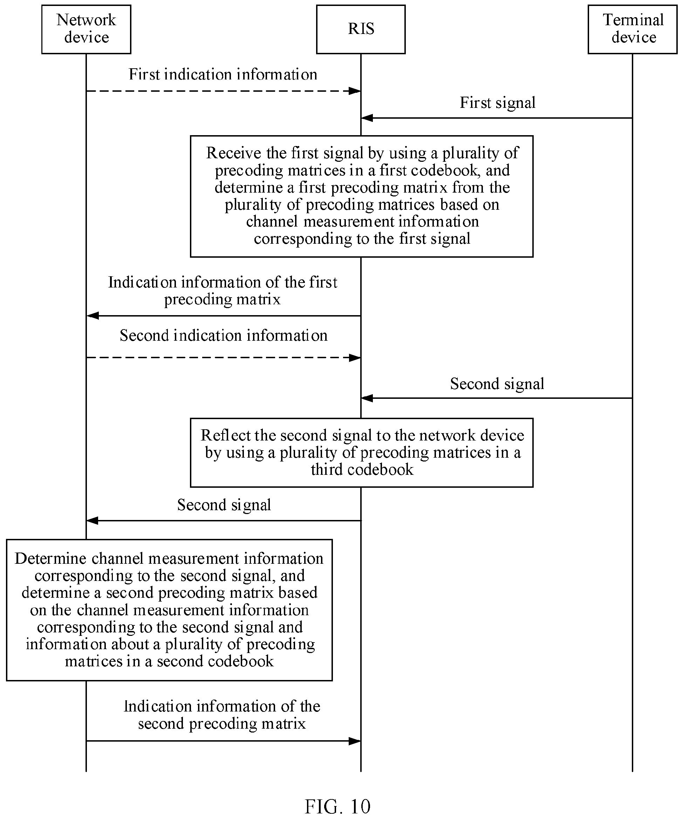

As shown in FIG. 10, in uplink communication, a transmitter is a terminal device, and a receiver is a network device. When a RIS has a channel measurement capability, the network device may send first indication information to the RIS, to indicate the RIS to receive a first signal by using a plurality of precoding matrices in a first codebook (a terminal-device-side codebook of the RIS). Optionally, the network device may further send, to the terminal device, indication information of a time-frequency resource occupied by the first signal, so that the terminal device sends the first signal by using the time-frequency resource. The terminal device may send the first signal to the RIS. The RIS receives the first signal by using the plurality of precoding matrices in the first codebook, and determines a first precoding matrix from the plurality of precoding matrices based on channel measurement information corresponding to the first signal. The RIS may further send indication information of the first precoding matrix to the network device. Correspondingly, the network device may determine the first precoding matrix based on the indication information. Further, after determining the first precoding matrix, the network device may determine a plurality of precoding matrices in a third codebook (a concatenated codebook of the RIS) based on the first precoding matrix. The plurality of precoding matrices correspond to the first precoding matrix and a plurality of precoding matrices in a second codebook (a network-device-side codebook of the RIS). The network device may further send second indication information to the RIS, to indicate the RIS to receive the first signal by using the plurality of precoding matrices in the third codebook. The plurality of precoding matrices correspond to the first precoding matrix and the plurality of precoding matrices in the second codebook. Optionally, the network device may further send, to the terminal device, indication information of a time-frequency resource occupied by the second signal, so that the terminal device sends the second signal by using the time-frequency resource. The terminal device may further send the second signal. The RIS reflects the second signal to the network device by using the plurality of precoding matrices in the third codebook. Correspondingly, the network device receives the second signal, and determines channel measurement information corresponding to the second signal. The network device may further determine a second precoding matrix based on the channel measurement information corresponding to the second signal and information about the plurality of precoding matrices in the second codebook. For example, the information about the plurality of precoding matrices in the second codebook may include the content shown in Table 2. The network device may further send indication information of the second precoding matrix to the RIS, to indicate the RIS to transmit a signal between the network device and the terminal device by using a precoding matrix (a third precoding matrix) corresponding to the first precoding matrix and the second precoding matrix.

In addition, optionally, the network device may further send control information to the RIS, to indicate time or a sequence in which the RIS receives the first signal by using the plurality of precoding matrices in the first codebook. Optionally, the network device may further send, to the RIS, the indication information of the time-frequency resource occupied by the first signal. The RIS may determine, based on the indication information, the time-frequency resource occupied by the first signal, and receive the first signal based on the time-frequency resource. Optionally, before the terminal device sends the second signal, the network device may further send control information to the RIS or the terminal device, to indicate time or a sequence in which the RIS reflects the second signal by using the plurality of precoding matrices in the second codebook. Optionally, the network device may further send, to the RIS, the indication information of the time-frequency resource occupied by the second signal. The RIS may determine, based on the indication information, the time-frequency resource occupied by the second signal, and reflect the second signal based on the time-frequency resource.

Optionally, in the procedures shown in FIG. 9 and FIG. 10, the RIS may further report capability information to the network device. The capability information may indicate that the RIS has a capability to perform channel measurement and/or determine a precoding matrix.

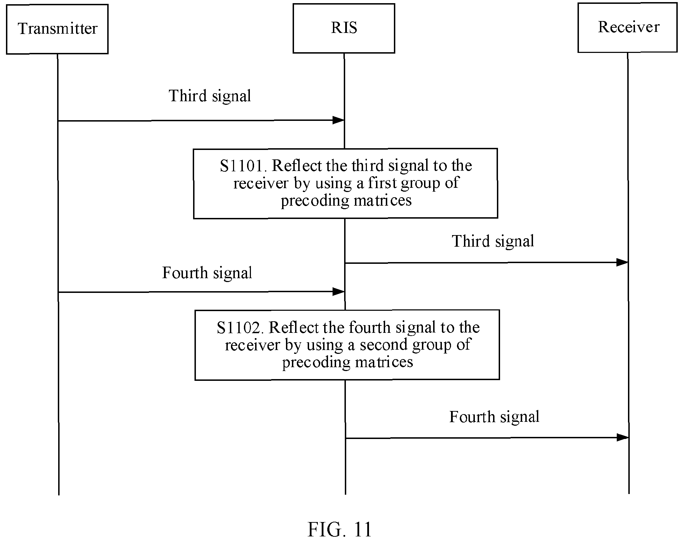

An embodiment of this application further provides another communication method, as shown in FIG. 11. A difference from the communication method shown in FIG. 8 lies in that, in a procedure shown in FIG. 11, a RIS is not required to have a measurement capability, and an optimal incident-side codebook of the RIS is not required to be first determined. In the procedure shown in FIG. 8, the first precoding matrix is first determined, and then the second precoding matrix is determined. The first precoding matrix is included in the incident-side codebook of the RIS, and the second precoding matrix is included in the emergent-side codebook of the RIS.

As shown in FIG. 11, a communication method provided in an embodiment of this application may include the following steps.

S1101. A RIS reflects a third signal to a receiver by using a first group of precoding matrices, where the third signal is from a transmitter, and channel measurement information corresponding to the third signal is used to determine a fourth precoding matrix.

In S1101, the first group of precoding matrices are a plurality of precoding matrices in a third codebook. The first group of precoding matrices correspond to a plurality of precoding matrices in a fourth codebook and one precoding matrix in a fifth codebook, and the plurality of precoding matrices in the fourth codebook include the fourth precoding matrix. In other words, the fourth precoding matrix may be determined from the plurality of precoding matrices in the fourth codebook based on the channel measurement information corresponding to the third signal.

In this application, the fourth codebook and the fifth codebook each are one of a first codebook and a second codebook of the RIS, and the fourth codebook is different from the fifth codebook. Therefore, the fourth precoding matrix is a precoding matrix in the first codebook or a precoding matrix in the second codebook. As described in S801, the first codebook may be used to adjust a characteristic of a channel between the transmitter and the RIS, or the first codebook is an incident-side codebook of the RIS. The second codebook is used to adjust a characteristic of a channel between the RIS and the receiver, or the second codebook is an emergent-side codebook of the RIS. The first codebook and the second codebook are used to determine the third codebook. The third codebook is used to adjust a characteristic of a channel between the transmitter, the RIS, and the receiver, or the third codebook is a concatenated codebook of the RIS.

It may be understood that, that the first group of precoding matrices correspond to a plurality of precoding matrices in a fourth codebook and one precoding matrix in a fifth codebook indicates that a plurality of precoding matrices in the first group of precoding matrices each correspond to the precoding matrix in the fifth codebook and one of the plurality of precoding matrices in the fourth codebook.

Referring to the descriptions of the channel measurement information corresponding to the first signal or the second signal in this application, the channel measurement information corresponding to the third signal may include channel measurement results of the third signal, or include time indication information or sequence indication information determined based on the channel measurement results of the third signal.

In addition, the RIS, the receiver, or the transmitter may determine the fourth precoding matrix based on the channel measurement information corresponding to the third signal and information about the plurality of precoding matrices in the fourth codebook. It may be understood that, for a manner in which the RIS, the receiver, or the transmitter determines the fourth precoding matrix based on the channel measurement information corresponding to the third signal and the information about the plurality of precoding matrices in the fourth codebook, refer to the foregoing descriptions of determining, by the RIS, the receiver, or the transmitter, the second precoding matrix based on the channel measurement information corresponding to the second signal and the information about the plurality of precoding matrices in the second codebook. Details are not described.

Referring to the foregoing descriptions of the information about the plurality of precoding matrices in the second codebook, the information about the plurality of precoding matrices in the fourth codebook may include respective indication information (for example, indices) of the plurality of precoding matrices in the fourth codebook, a correspondence between the precoding matrix in the fifth codebook, the plurality of precoding matrices in the fourth codebook, and the plurality of precoding matrices in the third codebook, or use time information or use sequence information corresponding to the plurality of precoding matrices in the fourth codebook. For example, the index of the first precoding matrix in the first codebook in Table 2 may be replaced with an index of the precoding matrix in the fifth codebook, and the indices of the plurality of precoding matrices in the second codebook in Table 2 may be replaced with the indices of the plurality of precoding matrices in the fourth codebook. In this case, the information about the plurality of precoding matrices in the fourth codebook may include replaced Table 2.

Optionally, if the receiver or the transmitter determines the fourth precoding matrix, a network device may further send indication information of the fourth precoding matrix to the RIS, so that the RIS determines the fourth precoding matrix based on the indication information. If the RIS determines the fourth precoding matrix, optionally, the RIS may send indication information of the fourth precoding matrix to the network device, so that the network device determines the fourth precoding matrix based on the indication information.

Optionally, before S1101, the network device may send third indication information to the RIS, to indicate the RIS to reflect the third signal to the receiver by using the first group of precoding matrices. The third indication information may include indication information of the first group of precoding matrices (for example, an index of each precoding matrix in the first group of precoding matrices in the third codebook). Alternatively, the third indication information may include the indication information of the plurality of precoding matrices in the fourth codebook and/or indication information of the precoding matrix in the fifth codebook, so that the RIS may determine the first group of precoding matrices based on the indication information of the plurality of precoding matrices and the indication information of the precoding matrix in the fifth codebook. The plurality of precoding matrices in the fourth codebook may alternatively be preconfigured, predefined, or defined in a protocol, for example, all precoding matrices in the fourth codebook. The precoding matrix in the fifth codebook may alternatively be preconfigured, predefined, or defined in a protocol, for example, a default precoding matrix.

S1102. The RIS reflects a fourth signal to the receiver by using a second group of precoding matrices, where the fourth signal is from the transmitter, and channel measurement information corresponding to the fourth signal is used to determine a fifth precoding matrix.

In S1102, the second group of precoding matrices are a plurality of precoding matrices in the third codebook. The second group of precoding matrices correspond to the fourth precoding matrix and a plurality of precoding matrices in the fifth codebook, and the plurality of precoding matrices in the fifth codebook include the fifth precoding matrix. In other words, the fifth precoding matrix may be determined from the plurality of precoding matrices in the fifth codebook based on the channel measurement information corresponding to the fourth signal.

It may be understood that, that the second group of precoding matrices correspond to the fourth precoding matrix and a plurality of precoding matrices in the fifth codebook indicates that a plurality of precoding matrices in the second group of precoding matrices each correspond to the fourth precoding matrix and one of the plurality of precoding matrices in the fifth codebook.

Referring to the descriptions of the channel measurement information corresponding to the first signal or the second signal in this application, the channel measurement information corresponding to the fourth signal may include channel measurement results of the fourth signal, or include time indication information or sequence indication information determined based on the channel measurement results of the fourth signal.

In addition, the RIS, the receiver, or the transmitter may determine the fifth precoding matrix based on the channel measurement information corresponding to the fourth signal and information about the plurality of precoding matrices in the fifth codebook. It may be understood that, for a manner in which the RIS, the receiver, or the transmitter determines the fifth precoding matrix based on the channel measurement information corresponding to the fourth signal and the information about the plurality of precoding matrices in the fifth codebook, refer to the foregoing descriptions of determining, by the RIS, the receiver, or the transmitter, the second precoding matrix based on the channel measurement information corresponding to the second signal and the information about the plurality of precoding matrices in the second codebook. Details are not described.

Referring to the foregoing descriptions of the information about the plurality of precoding matrices in the second codebook, the information about the plurality of precoding matrices in the fifth codebook may include respective indication information (for example, indices) of the plurality of precoding matrices in the fifth codebook, a correspondence between the fourth precoding matrix, the plurality of precoding matrices in the fifth codebook, and the plurality of precoding matrices in the third codebook, or use time information or use sequence information corresponding to the plurality of precoding matrices in the fifth codebook. For example, the index of the first precoding matrix in the first codebook in Table 2 may be replaced with an index of the fourth precoding matrix in the fourth codebook, and the indices of the plurality of precoding matrices in the second codebook in Table 2 may be replaced with the indices of the plurality of precoding matrices in the fifth codebook. In this case, the information about the plurality of precoding matrices in the fifth codebook may include replaced Table 2.

Optionally, if the receiver or the transmitter determines the fifth precoding matrix, the network device may further send indication information of the fifth precoding matrix to the RIS, so that the RIS determines the fifth precoding matrix based on the indication information. If the RIS determines the fifth precoding matrix, optionally, the RIS may send indication information of the fifth precoding matrix to the network device, so that the network device determines the fifth precoding matrix based on the indication information.

Optionally, before S1102, the network device may send fourth indication information to the RIS, to indicate the RIS to reflect the fourth signal to the receiver by using the second group of precoding matrices. The fourth indication information may include indication information of the second group of precoding matrices (for example, an index of each precoding matrix in the second group of precoding matrices in the third codebook). Alternatively, the fourth indication information may include the indication information of the fourth precoding matrix and/or the indication information of the plurality of precoding matrices in the fifth codebook, so that the RIS may determine the second group of precoding matrices based on the indication information of the fourth precoding matrix and the indication information of the plurality of precoding matrices in the fifth codebook. The plurality of precoding matrices in the fifth codebook may alternatively be preconfigured or predefined, for example, all precoding matrices in the fifth codebook. Alternatively, the indication information of the fourth precoding matrix may be sent independently of the fourth indication information. This is not specifically limited.

Based on the procedure shown in FIG. 11, the RIS may reflect the third signal by using the first group of precoding matrices, and reflect the fourth signal by using the second group of precoding matrices. The channel measurement information corresponding to the third signal and the channel measurement information of the fourth signal may be respectively used to determine the fourth precoding matrix and the fifth precoding matrix. The fourth precoding matrix and the fifth precoding matrix may be used to determine a sixth precoding matrix. Therefore, the precoding matrix in the third codebook of the RIS can be determined.

A manner of determining the sixth precoding matrix based on the fourth precoding matrix and the fifth precoding matrix corresponds to a manner of decoupling the third codebook to obtain the first codebook and the second codebook.

Optionally, in the procedure shown in FIG. 11, the network device may send information to the RIS, to indicate that the fourth codebook is the first codebook or the second codebook, or indicate that the fifth codebook is the first codebook or the fifth codebook. In addition, the RIS may alternatively determine, in a default manner, that the fourth codebook is the first codebook or the second codebook. For example, the RIS first scans the first codebook by default, in other words, the fourth codebook is the first codebook. In this case, the network device needs to indicate only indices that need to be scanned in the first codebook.

Optionally, the network device may use the third indication information and/or the fourth indication information to carry information, to indicate that the fourth codebook is the first codebook or the second codebook, or indicate that the fifth codebook is the first codebook or the fifth codebook.

It may be understood that the procedure shown in FIG. 11 may further include: the RIS sends codebook information of the RIS to the network device. The codebook information of the RIS includes but is not limited to the first codebook, the second codebook, and the third codebook of the RIS, information about the manner of decoupling the third codebook to obtain the first codebook and the second codebook, and a beam scanning range.

Optionally, in the procedure shown in FIG. 11, the network device may further indicate, to the RIS, a codebook that needs to be scanned (or needs repetition on (repetition off)) and/or a codebook that does not need to be scanned (alternatively referred to as a codebook that needs to be fixed or needs repetition off (repetition on)) when the third signal is reflected and/or a codebook that needs to be scanned and/or a codebook that does not need to be scanned when the fourth signal is reflected. The codebook that needs to be scanned when the third signal is reflected is the fourth codebook, and the codebook that does not need to be scanned when the third signal is reflected is the fifth codebook. The codebook that needs to be scanned when the fourth signal is reflected is the fifth codebook, and the codebook that does not need to be scanned when the fourth signal is reflected is the fourth codebook. For example, before S1101, the network device may send, to the RIS, information indicating that the incident-side codebook does not need to be scanned. In this case, the fourth codebook is the emergent-side codebook, and the fifth codebook is the incident-side codebook. For another example, before S1105, the network device may send, to the RIS, information indicating that the emergent-side codebook does not need to be scanned. In this case, the fifth codebook is the incident-side codebook, and the fourth codebook is the emergent-side codebook.

In addition, the RIS may alternatively determine, through preconfiguration, predefinition, protocol definition, or negotiation determining, a codebook that needs to be scanned or does not need to be scanned when the third signal is reflected, and/or a codebook that needs to be scanned or does not need to be scanned when the fourth signal is reflected. It may be understood that the codebook that needs to be scanned when the RIS reflects the third signal is different from the codebook that needs to be scanned when the RIS reflects the fourth signal, and the two codebooks each are one of the incident-side codebook and the emergent-side codebook of the RIS.

The following uses uplink communication as an example to describe the method based on the procedure shown in FIG. 11.

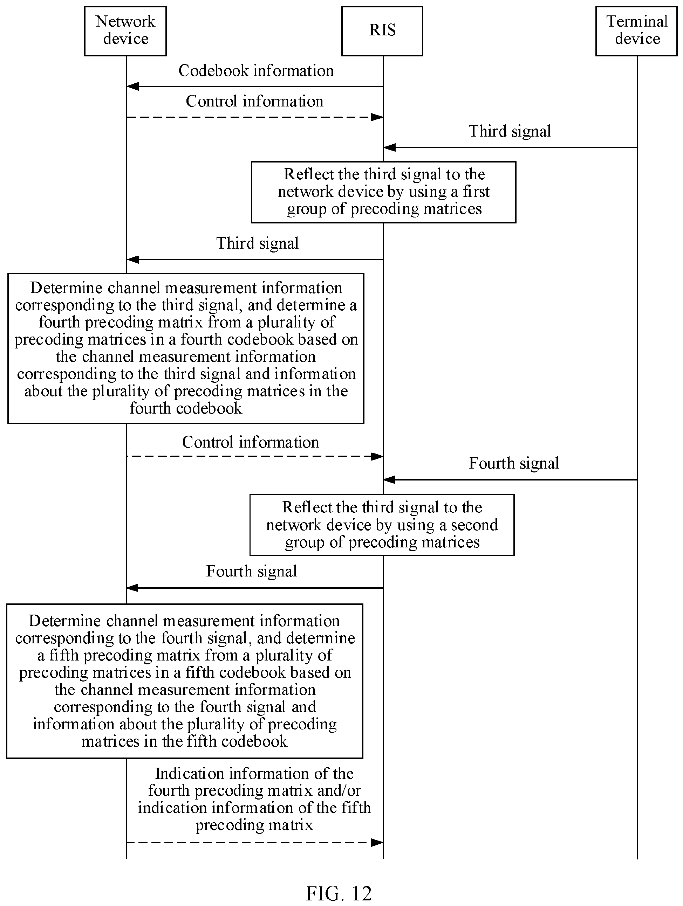

As shown in FIG. 12, in uplink communication, a transmitter is a terminal device, and a receiver is a network device. A RIS may report codebook information of the RIS to the network device. The network device may send control information to the RIS. The control information may include third indication information, indicating the RIS to reflect a third signal to the receiver by using a first group of precoding matrices. The third indication information may include use time information or use sequence information of precoding matrices used when the RIS reflects the third signal, and/or an index of a precoding matrix that needs to be fixed when the third signal is reflected. The precoding matrix that needs to be fixed when the third signal is reflected is a precoding matrix in the fifth codebook.

Optionally, the control information may further include indication information of a scanning sequence of an incident-side codebook and an emergent-side codebook of the RIS. The indication information may indicate a fourth codebook from a first codebook and a second codebook, or indicate the fifth codebook from the first codebook and the second codebook. For example, when the indication information indicates that the fourth codebook is the first codebook, it indicates that the incident-side codebook of the RIS is first scanned, and then the emergent-side codebook of the RIS is scanned.

Optionally, the control information may further include indication information of a time-frequency resource occupied by the third signal and/or indication information of a time-frequency resource occupied by a fourth signal. The RIS may determine, based on the indication information, the time-frequency resource occupied by the third signal and/or the time-frequency resource occupied by the fourth signal, to reflect the third signal based on the time-frequency resource and/or reflect the fourth signal based on the time-frequency resource.

Optionally, before the terminal device sends the third signal, the network device may further send, to the terminal device, the indication information of the time-frequency resource occupied by the third signal, so that the terminal device sends the third signal based on the time-frequency resource.

As shown in FIG. 12, the terminal device may send the third signal, and the RIS reflects the third signal to the network device by using the first group of precoding matrices. The first group of precoding matrices correspond to a plurality of precoding matrices in the fourth codebook and the precoding matrix in the fifth codebook. Correspondingly, the network device may receive the third signal, and determine channel measurement information corresponding to the third signal. The network device may further determine a fourth precoding matrix from the plurality of precoding matrices in the fourth codebook based on the channel measurement information corresponding to the third signal and information about the plurality of precoding matrices in the fourth codebook.

Optionally, after determining the fourth precoding matrix, the network device may further send control information to the RIS. The control information may include fourth indication information. The fourth indication information may include use time information or use sequence information of precoding matrices used when the RIS reflects the fourth signal, and/or an index of a precoding matrix that needs to be fixed when the fourth signal is reflected. For the fourth signal, the precoding matrix that needs to be fixed when the signal is reflected is the fourth precoding matrix.

Optionally, the control information may further include the indication information of the time-frequency resource occupied by the fourth signal. The RIS may determine, based on the indication information, the time-frequency resource occupied by the fourth signal, to reflect the fourth signal based on the time-frequency resource.

In addition, optionally, before the terminal device sends the fourth signal, the network device may further send, to the terminal device, the indication information of the time-frequency resource occupied by the fourth signal.

As shown in FIG. 12, the terminal device may further send the fourth signal, and the RIS reflects the fourth signal by using a second group of precoding matrices. The second group of precoding matrices correspond to the fourth precoding matrix and a plurality of precoding matrices in the fifth codebook. The network device receives the fourth signal, and determines channel measurement information corresponding to the fourth signal. The network device may further determine a fifth precoding matrix from the plurality of precoding matrices in the fifth codebook based on the channel measurement information corresponding to the fourth signal and information about the plurality of precoding matrices in the fifth codebook.

Optionally, the network device may send indication information of the fourth precoding matrix and/or indication information of the fifth precoding matrix to the RIS. The indication information of the fourth precoding matrix may be sent before the network device sends the control information including the fourth indication information, or may be sent after the fifth precoding matrix is determined. The indication information of the fourth precoding matrix may alternatively be included in the control information. This is not specifically limited.

It may be understood that, based on the procedures shown in FIG. 8 to FIG. 12, assuming that a quantity of the plurality of precoding matrices in the first codebook is M, and a quantity of the plurality of precoding matrices in the second codebook is N, a quantity of the precoding matrices in the third codebook is $I=M \times N$. Therefore, if the RIS separately uses the plurality of precoding matrices in the third codebook to reflect a signal between the transmitter and the receiver, the RIS can complete scanning of the plurality of precoding matrices in the third codebook only by separately using $=M \times N$ precoding matrices. However, according to the method shown in FIG. 8 or FIG. 11, the RIS needs to receive the first signal by using only the M precoding matrices in the first codebook (use only the M precoding matrices), and reflect the second signal by using only the N precoding matrices in the second codebook (use only the N precoding matrices). M+N precoding matrices are used in total, in other words, M+N times of precoding matrix scanning are performed, and the $I=M \times N$ precoding matrices in the third codebook do not need to be separately used, so that a quantity of scanning times and scanning duration can be greatly reduced.

As shown in Table 3, for example, M=128 and N=128. Codebook scanning is performed in the method shown in FIG. 8 or FIG. 11. Compared with a solution of performing codebook scanning based on the third codebook, a quantity of scanned precoding matrices and scanning time can be greatly reduced.

Table 3

| M=128, N=128 | Scan the M×N precoding matrices in the concatenated codebook of the RIS | Use the solution shown in FIG. 8 or FIG. 11. |
|---|---|---|
| Quantity of precoding matrices that need to be scanned | M×N=128×128=16384 | 128+128=256 |
| Scanning time (Herein, it is assumed that all times of scanning are performed in same duration t, and the scanning time is represented by a quantity of scanning times) | 128×128t=16384t | (128+128) t=256t |

Optionally, M is less than N. For example, $M=Y \times N$, and 0<Y<1. Because a location relationship between the network device and the RIS is usually fixed, in a process of decoupling the concatenated codebook, a quantity of precoding matrices in the network-device-side codebook of the RIS may be appropriately reduced, so that the quantity of precoding matrices in the network-device-side codebook of the RIS is less than a quantity of precoding matrices in the terminal-device-side codebook of the RIS; and/or a scanning range of the network-device-side codebook of the RIS may be reduced, so that the scanning range of the network-device-side codebook of the RIS is less than a scanning range of the terminal-device-side codebook of the RIS.

An embodiment of this application further provides another communication method, to reduce signaling overheads in a scanning process of a codebook of a RIS.

The following describes the method by using an example in which execution bodies are a first apparatus and a RIS. The first apparatus may be used as one of a transmitter and a receiver. It may be understood that, in this application, the first apparatus may communicate with a second apparatus through the RIS. For example, the first apparatus is the transmitter, and the second apparatus is the receiver; or the first apparatus is the receiver, and the second apparatus is the transmitter.

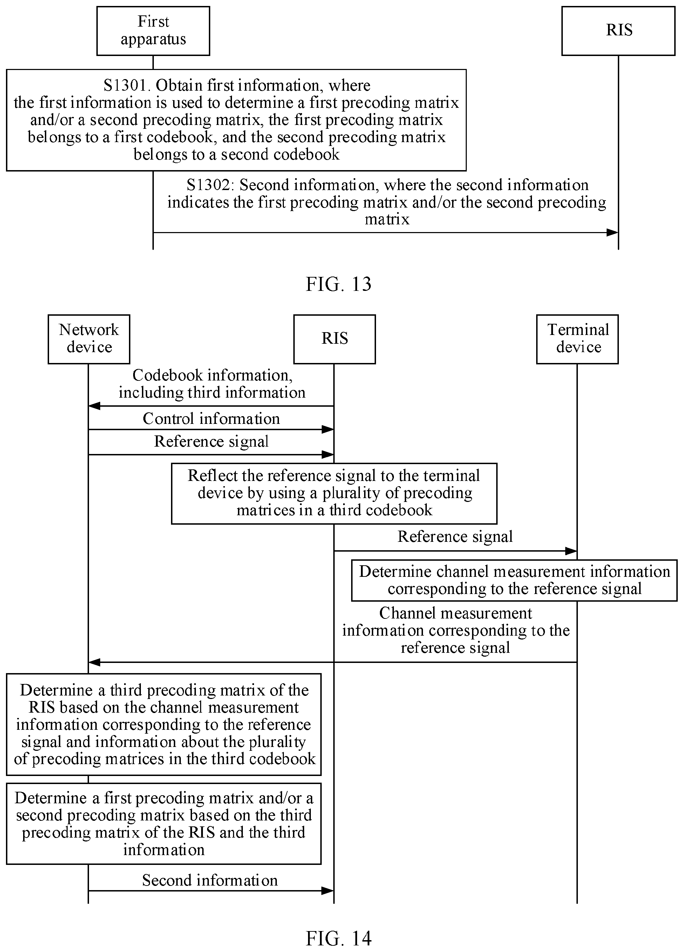

As shown in FIG. 13, a communication method provided in an embodiment of this application may include the following steps.

S1301. A first apparatus obtains first information. The first information is used to determine a first precoding matrix and/or a second precoding matrix, the first precoding matrix belongs to a first codebook, and the second precoding matrix belongs to a second codebook.

As described in S801, one precoding matrix in the first codebook and one precoding matrix in the second codebook of the RIS correspond to one precoding matrix in a third codebook of the RIS. The first codebook may be used to adjust a characteristic of a channel between a transmitter and the RIS, in other words, the first codebook is an incident-side codebook of the RIS. In addition, the second codebook is used to adjust a characteristic of a channel between the RIS and a receiver, in other words, the second codebook is an emergent-side codebook of the RIS. Optionally, the first codebook and/or the second codebook may be indicated by a network device, may be determined based on decoupling of the third codebook, or may be defined in a protocol, preconfigured, or predefined. This is not specifically required in this application. The third codebook may be used to adjust a characteristic of a channel between the transmitter, the RIS, and the receiver, in other words, the third codebook is a concatenated codebook of the RIS.

The first precoding matrix and/or the second precoding matrix may be determined based on a third precoding matrix and the first information. The third precoding matrix is a precoding matrix in the third codebook. Specifically, the RIS may reflect a signal between the transmitter and the receiver by using a plurality of precoding matrices in the third codebook, and channel measurement information corresponding to the signal may be used to determine the third precoding matrix from the plurality of precoding matrices in the third codebook.

S1302. The first apparatus sends second information to the RIS, where the second information indicates the first precoding matrix and/or the second precoding matrix.

Optionally, the second information may include indication information (for example, an index) of the first precoding matrix and/or indication information (for example, an index) of the second precoding matrix.

Therefore, based on the method shown in FIG. 13, the RIS may determine the first precoding matrix and/or the second precoding matrix based on the second information. The first precoding matrix is an incident-side precoding matrix of the RIS, and the second precoding matrix is an emergent-side precoding matrix of the RIS. Because the second information needs to indicate only the first precoding matrix and/or the second precoding matrix, and does not need to indicate a precoding matrix in the third codebook of the RIS, signaling overheads can be reduced.

Still in an example in which M incident beams and N emergent beams need to be scanned in space, each incident beam corresponds to one incident-side precoding matrix of the RIS, and each emergent beam corresponds to one emergent-side precoding matrix of the RIS. Therefore, the third codebook includes I=M×N precoding matrices. Therefore, if a precoding matrix in the third codebook is indicated, there are relatively large signaling overheads. According to the method shown in FIG. 13, only the first precoding matrix needs to be indicated from M incident-side precoding matrices, and only the second precoding matrix needs to be indicated from N precoding matrices, so that signaling overheads can be greatly reduced.

As shown in Table 4, for example, M=128 and N=128. The first precoding matrix and the second precoding matrix are indicated in the method shown in FIG. 13. Compared with a solution of indicating a precoding matrix in the concatenated codebook of the RIS, signaling overheads can be reduced by at least 6 bits, and a lower quadrature amplitude modulation (quadrature amplitude modulation, QAM) order can be used to improve communication reliability.

Table 4

| M=128, N=128 | Indicate the concatenated codebook of the RIS | Indicate the first precoding matrix and the second precoding matrix |
|---|---|---|
| Air interface indication overheads | 14 bits (bits) | 8 bits |
| Modulation order | 16QAM | 8QAM |

Referring to the descriptions in S802, in the method shown in FIG. 13, the first apparatus, the RIS, or a second apparatus may determine the third precoding matrix based on channel measurement information corresponding to a reference signal and information about the plurality of precoding matrices in the third codebook that are used when the RIS reflects the reference signal.

Referring to the descriptions of the information about the plurality of precoding matrices in the third codebook in S802, the information about the plurality of precoding matrices in the third codebook that are used when the RIS reflects the reference signal may include indication information (for example, indices) of the precoding matrices used when the RIS reflects the reference signal and use time information or use sequence information of the plurality of precoding matrices.

For example, the first apparatus determines the third precoding matrix. The first apparatus may determine the third precoding matrix, and determine the first precoding matrix and/or the second precoding matrix based on the third precoding matrix and third information. The third precoding matrix may be determined by the first apparatus or the second apparatus based on the channel measurement information.

As a possible implementation of the method shown in FIG. 13, in S 1301, the first information includes the third information, and the third information indicates a correspondence between the first codebook, the second codebook, and the third codebook. The first apparatus may further obtain the channel measurement information, and determine the third precoding matrix based on the channel measurement information. The third precoding matrix belongs to the third codebook. The first apparatus may further determine the first precoding matrix and/or the second precoding matrix based on the third precoding matrix and the third information.

Optionally, in this implementation, the RIS or the second apparatus may send the third information to the first apparatus. The second apparatus may obtain the third information from the RIS. Alternatively, optionally, the first apparatus may obtain the third information through protocol definition, preconfiguration, or predefinition. The channel measurement information may be obtained based on measurement of the reference signal, the reference signal is transmitted between the first apparatus and the second apparatus through the RIS, and the RIS receives and modulates the reference signal by using the plurality of precoding matrices in the third codebook.

As described in S801, the channel measurement information may include channel measurement results corresponding to the reference signal, for example, RSRP or SINRs, or the channel measurement information may include time or sequence indication information of optimal channel quality determined based on the channel measurement results corresponding to the reference signal.

Optionally, the reference signal may be sent by the first apparatus. The RIS reflects the reference signal by using, in a polling manner, the plurality of precoding matrices in the third codebook, and the second apparatus receives the reference signal. Correspondingly, the first apparatus may receive the channel measurement information from the second apparatus. The channel measurement information is obtained by the second apparatus by measuring the reference signal.

Alternatively, optionally, the reference signal may be sent by the second apparatus. The RIS reflects the reference signal by using, in a polling manner, the plurality of precoding matrices in the third codebook, and the first apparatus receives the reference signal. Correspondingly, the first apparatus may measure the reference signal to obtain the channel measurement information.

It may be understood that, in this implementation, the third information may include a correspondence between precoding matrices in the first codebook, precoding matrices in the second codebook, and the precoding matrices in the third codebook. Alternatively, the third information may include information about a manner of decoupling the third codebook to determine the first codebook and the second codebook, for example, include a function relationship met between the first codebook, the second codebook, and the third codebook. For example, the function relationship is shown in FIG. 6. Alternatively, the third information may include a function relationship met between precoding matrices in the first codebook, precoding matrices in the second codebook, and the precoding matrices in the third codebook.

In another possible implementation of the embodiment shown in FIG. 13, in S1301, the first information indicates the first precoding matrix and/or the second precoding matrix. For example, the first information includes the indication information (for example, the index) of the first precoding matrix and/or the indication information (for example, the index) of the second precoding matrix.

Optionally, in this implementation, the first apparatus may send the reference signal, and the second apparatus measures the reference signal, determines the channel measurement information corresponding to the reference signal, and determines the third precoding matrix based on the channel measurement information. In addition, the second apparatus may further determine the first precoding matrix and/or the second precoding matrix based on the third precoding matrix and the third information.

In addition, optionally, in this possible implementation, the second apparatus may send the reference signal, the first apparatus measures the reference signal and determines the channel measurement information corresponding to the reference signal, and the first apparatus sends the channel measurement information corresponding to the reference signal to the second apparatus. Therefore, the second apparatus may determine the third precoding matrix based on the channel measurement information, and determine the first precoding matrix and/or the second precoding matrix based on the third precoding matrix and the third information.

Optionally, in this implementation, the first apparatus and/or the RIS may send the third information to the second apparatus. For the third information, refer to the descriptions in the foregoing possible implementation.

As an example, in the procedure shown in FIG. 13, the first apparatus is the network device or an apparatus included in the network device, and the second apparatus is a terminal device or an apparatus included in the terminal device. Therefore, the network device may indicate the first precoding matrix and/or the second precoding matrix to the RIS.

The following uses downlink communication as an example to describe the method based on the procedure shown in FIG. 13.

As shown in FIG. 14, in downlink communication, a network device sends a reference signal to a terminal device. Herein, an example in which the first apparatus shown in FIG. 13 is the network device and the second apparatus is the terminal device is used for description. Optionally, before the reference signal is sent, a RIS may send codebook information to the network device. For example, the codebook information may further include a beam scanning range corresponding to precoding matrices. Corresponding to S1301, the codebook information includes third information. In addition, the network device may further send control information to the RIS. The control information includes use time information or use sequence information of a plurality of precoding matrices in a concatenated codebook that are used when the RIS reflects the reference signal. In addition, the RIS may alternatively send, to the network device, use time information or use sequence information of a plurality of precoding matrices in a concatenated codebook that are used when the RIS reflects the reference signal.

The use time information or the use sequence information of the plurality of precoding matrices in the concatenated codebook that are used when the RIS reflects the reference signal includes, for example, a correspondence between precoding matrices in a third codebook and indices of time units in which the precoding matrices are used.

For example, the time unit is a slot. Table 5 shows an example of a correspondence between precoding matrices and scanning slots. It may be learned that the RIS reflects the reference signal in each of a slot 0 to a slot 3 by using one precoding matrix in the third codebook $\Phi_{m,n}$.

Table 5

| Slot | 0 | 1 | 2 | 3 |
|---|---|---|---|---|
| $\Phi_{m,n}$ | 3 | 1 | 2 | 0 |

$\Phi_{m,n}$ represents a precoding matrix in the third codebook, and m and n are respectively an incident-side beam index and an emergent-side beam index corresponding to the precoding matrix. Therefore, the RIS may use, in the slot 0, a precoding matrix whose index is 3 in the third codebook; use, in the slot 1, a precoding matrix whose index is 1 in the third codebook; and so on.

Optionally, the third information may include a precoding matrix correspondence shown in Table 6. The correspondence may indicate a correspondence between the precoding matrices in the third codebook and precoding matrices in a first codebook and precoding matrices in a second codebook.

Table 6

| $\Phi_{m,n}$ | 3 | 1 | 2 | 0 |
|---|---|---|---|---|
| $\Phi_m, \Phi_n$ | 1, 1 | 0, 1 | 1, 0 | 0, 0 |

$\Phi_m$ and $\Phi_n$ respectively represent a precoding matrix in the first codebook and a precoding matrix in the second codebook, and m and n are respectively an incident-side beam index and an emergent-side beam index corresponding to the precoding matrices. It may be learned from Table 5 that, a precoding matrix whose index is 3 in the third codebook corresponds to a precoding matrix whose index is 1 in the first codebook and a precoding matrix whose index is 1 in the second codebook. It may be understood that a precoding matrix in the third codebook may be decoupled into a precoding matrix in the first codebook and a precoding matrix in the second codebook that correspond to the precoding matrix in the third codebook.

In addition, optionally, Table 4 and Table 5 may be combined into one table, for example, as shown in Table 7.

Table 7

| Scanning slot | 0 | 1 | 2 | 3 |
|---|---|---|---|---|
| $\Phi_{m,n}$ | 3 | 1 | 2 | 0 |
| $\Phi_m, \Phi_n$ | 1, 1 | 0, 1 | 1, 0 | 0, 0 |

In addition, in FIG. 14, the network device may send the reference signal, and the RIS may reflect the reference signal to the terminal device by using the plurality of precoding matrices in the third codebook. Correspondingly, the terminal device receives the reference signal, and measures the reference signal to determine channel measurement information corresponding to the reference signal. The terminal device sends the channel measurement information corresponding to the reference signal to the network device. The network device determines a third precoding matrix of the RIS based on the received channel measurement information corresponding to the reference signal and information about the plurality of precoding matrices in the third codebook. The network device further determines a first precoding matrix and/or a second precoding matrix based on the third precoding matrix and the third information. Corresponding to S1302, the network device sends second information to the RIS, to indicate the first precoding matrix and/or the second precoding matrix.

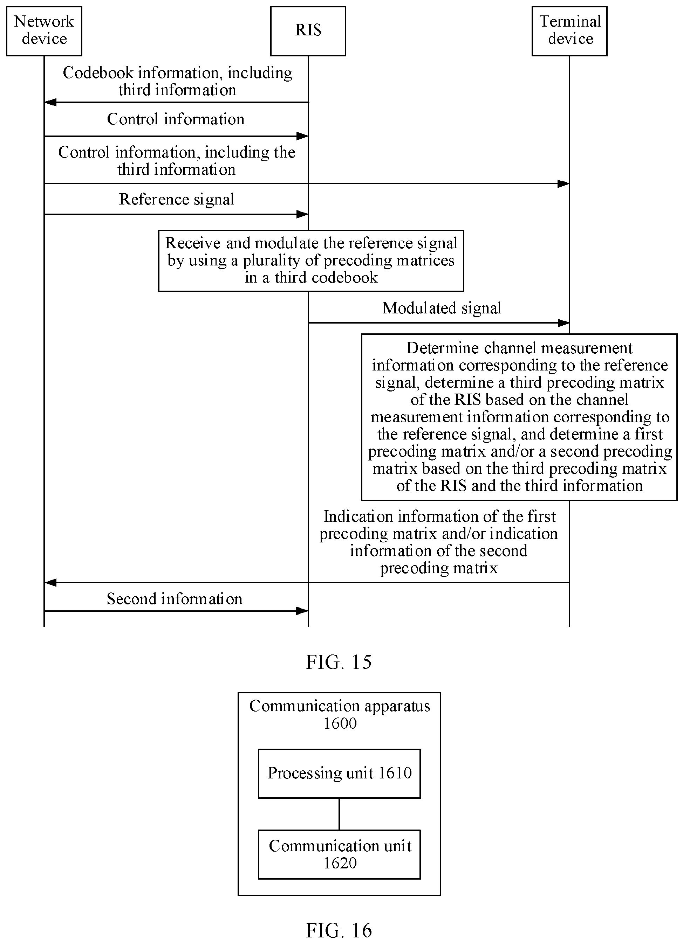

As shown in FIG. 15, in downlink communication, a terminal device may receive control information from a network device. The control information may include third information. Therefore, the third information can be obtained. The third information may be sent by a RIS to the network device by using codebook information. Therefore, the terminal device may determine a third precoding matrix of the RIS based on measurement results of a downlink signal. Further, the terminal device may determine a first precoding matrix and/or a second precoding matrix based on the third precoding matrix of the RIS and the third information. Therefore, when feeding back channel measurement to the network device, the terminal device may send indication information of the first precoding matrix and/or indication information of the second precoding matrix to the network device, to reduce signaling overheads.

In addition, a difference between the procedure shown in FIG. 15 and the procedure shown in FIG. 14 lies in that the network device or the RIS may send the control information to the terminal device, where the control information includes the third information, so that the terminal device determines the first precoding matrix and/or the second precoding matrix based on the third precoding matrix of the RIS and the third information. For example, the network device may send the third information to the terminal device before, when, or after the network device sends the reference signal.

In addition, the network device may alternatively send control information to the terminal device, to indicate information about a plurality of precoding matrices in a third codebook, so that after obtaining channel measurement information corresponding to the reference signal through measurement, the terminal device determines the third precoding matrix based on the channel measurement information and the information about the plurality of precoding matrices in the third codebook. Further, the terminal device determines the first precoding matrix and/or the second precoding matrix of the RIS based on the third precoding matrix and the third information.

In FIG. 15, the terminal device may further send second information to the network device.

For example, in FIG. 15, the network device or the RIS may further send, to the terminal device, the correspondences shown in Table 5 and Table 6 or the correspondence shown in Table 7.

It may be understood that the terminal device in FIG. 15 corresponds to the first apparatus shown in FIG. 13, and the network device shown in FIG. 15 corresponds to the second apparatus shown in FIG. 13. For example, in FIG. 15, the action of receiving, by the terminal device from the network device, the control information that includes the third information may correspond to S1301 shown in FIG. 13. In FIG. 15, an action of sending, by the terminal device, the second information to the network device may correspond to S1302 shown in FIG. 13.

Optionally, in this application, if a plurality of precoding matrices correspond to a same channel measurement result, or time indication information or sequence indication information of an optimal channel measurement result corresponds to a plurality of precoding matrices, a precoding matrix may be selected from the plurality of precoding matrices as an optimal precoding matrix. A selection manner includes random selection, selection performed in descending order or ascending order of indices, or the like. This is not specifically required. It may be understood that the optimal precoding matrix herein includes the first precoding matrix, the second precoding matrix, the third precoding matrix, or the fourth precoding matrix in this application.

It may be understood that, to implement the functions in the foregoing embodiments, embodiments of this application further provide a communication apparatus. The communication apparatus may include corresponding hardware structures and/or software modules for performing the functions. Persons skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

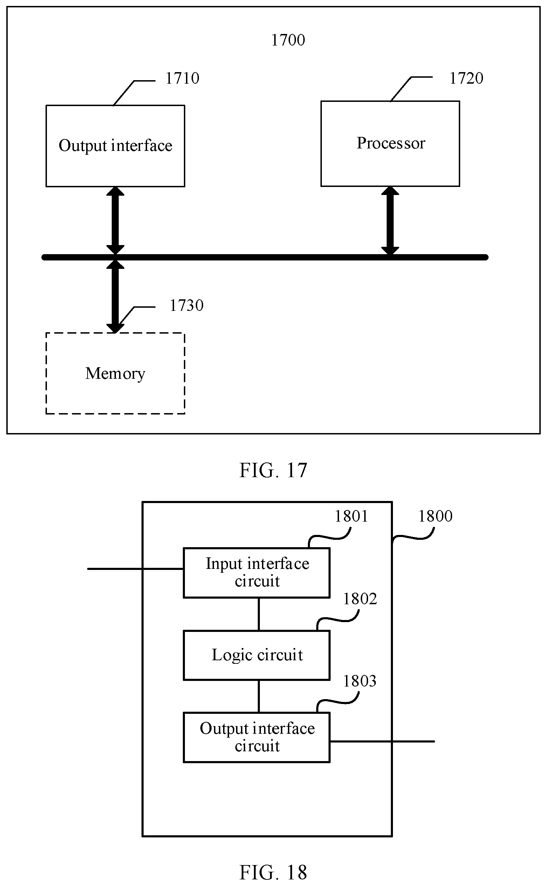

FIG. 16 and FIG. 18 each are a diagram of a structure of a possible communication apparatus according to an embodiment of this application. The communication apparatus may be configured to implement the functions of the RIS, the network device, the first apparatus, or the second apparatus in the foregoing method embodiments, and therefore can also implement the beneficial effects of the foregoing method embodiments. In a possible implementation, the communication apparatus may be any network device or terminal device shown in FIG. 1, FIG. 3, FIG. 4, FIG. 5, or FIG. 7, may be any RIS shown in FIG. 3 to FIG. 5 or FIG. 7, or may be a module (for example, a chip) used in the terminal device, the network device, or the RIS. For related details and effects, refer to the descriptions in the foregoing embodiments.

As shown in FIG. 16, a communication apparatus 1600 includes a processing unit 1610 and a communication unit 1620. The communication unit 1620 may alternatively be a transceiver unit, an input/output interface, or the like. The communication apparatus 1600 may be configured to implement the functions of the RIS, the network device, the first apparatus, or the second apparatus in the foregoing method embodiments shown in FIG. 8 to FIG. 15.

For example, the communication apparatus 1600 is configured to implement the functions of the RIS in the method embodiment shown in FIG. 8:

The communication unit 1620 may be configured to receive a first signal from a transmitter by using a plurality of precoding matrices in a first codebook of a RIS. The communication unit 1620 may be further configured to reflect a second signal to a receiver by using a plurality of precoding matrices in a third codebook.

In a possible implementation, the processing unit 1610 may be configured to determine a first precoding matrix from the plurality of precoding matrices in the first codebook of the RIS based on channel measurement information corresponding to the first signal.

In a possible implementation, the communication unit 1620 may be further configured to receive channel measurement information corresponding to the first signal. The processing unit 1610 may be further configured to determine a first precoding matrix from the plurality of precoding matrices in the first codebook of the RIS based on the channel measurement information corresponding to the first signal.

In a possible implementation, the communication unit 1620 may be further configured to send indication information of the first precoding matrix to a network device.

In a possible implementation, the communication unit 1620 may be further configured to send the channel measurement information corresponding to the first signal to a network device. The network device includes the transmitter or the receiver.

In a possible implementation, the communication unit 1620 may be further configured to receive indication information of the first precoding matrix from the network device, and the processing unit 1610 may be configured to determine the first precoding matrix based on the indication information of the first precoding matrix.

In a possible implementation, the communication unit 1620 may be further configured to receive first indication information from the network device.

In a possible implementation, the communication unit 1620 may be further configured to receive indication information of a second precoding matrix from the network device, and the processing unit 1610 may be configured to determine the second precoding matrix based on the indication information of the second precoding matrix.

In a possible implementation, the communication unit 1620 may be further configured to receive channel measurement information corresponding to the second signal from the network device. The processing unit 1610 may be configured to determine a second precoding matrix from a plurality of precoding matrices in a second codebook based on the received channel measurement information corresponding to the second signal.

In a possible implementation, the communication unit 1620 may be further configured to send indication information of the second precoding matrix to the network device.

In a possible implementation, the communication unit 1620 may be further configured to receive second indication information from the network device.

The communication apparatus 1600 is configured to implement the functions of the network device in the method embodiment shown in FIG. 8:

The communication unit 1620 may be configured to send first indication information to a RIS. The communication unit 1620 may be further configured to send second indication information to the RIS.

In a possible implementation, the communication unit 1620 may be further configured to receive indication information of a first precoding matrix from the RIS.

In a possible implementation, the communication unit 1620 may be further configured to receive channel measurement information corresponding to a first signal from the RIS. The processing unit 1610 may be further configured to determine a first precoding matrix from a plurality of precoding matrices in a first codebook of the RIS based on the channel measurement information corresponding to the first signal.

In a possible implementation, the communication unit 1620 may be further configured to send indication information of the first precoding matrix to the RIS.

In a possible implementation, the communication unit 1620 may be further configured to send indication information of a second precoding matrix to the RIS.

In a possible implementation, the communication unit 1620 may be further configured to send channel measurement information corresponding to a second signal to the RIS. The communication unit 1620 may be further configured to receive indication information of a second precoding matrix from the RIS. The processing unit 1610 may be further configured to determine the second precoding matrix based on the indication information of the second precoding matrix.

The communication apparatus 1600 is configured to implement the functions of the RIS in the method embodiment shown in FIG. 11:

The communication unit 1620 may be configured to reflect a third signal to a receiver by using a first group of precoding matrices. The communication unit 1620 may be further configured to reflect a fourth signal to the receiver by using a second group of precoding matrices.

In a possible implementation, the communication unit 1620 may be further configured to receive third indication information from a network device.

In a possible implementation, the communication unit 1620 may be further configured to receive indication information of a fourth precoding matrix from the network device. The processing unit 1610 may be further configured to determine the fourth precoding matrix based on the indication information of the fourth precoding matrix.

In a possible implementation, the communication unit 1620 may be further configured to receive fourth indication information from the network device.

In a possible implementation, the communication unit 1620 may be further configured to receive indication information of a fifth precoding matrix from the network device. The processing unit 1610 may be further configured to determine the fifth precoding matrix based on the indication information of the fifth precoding matrix.

The communication apparatus 1600 is configured to implement the functions of the network device in the method embodiment shown in FIG. 11:

The communication unit 1620 may be configured to send third indication information to a RIS. The communication unit 1620 may be further configured to send fourth indication information to the RIS.

In a possible implementation, the communication unit 1620 may be further configured to send indication information of a fourth precoding matrix to the RIS.

In a possible implementation, the communication unit 1620 may be further configured to send indication information of a fifth precoding matrix to the RIS.

The communication apparatus 1600 is configured to implement the functions of the first apparatus in the method embodiment shown in FIG. 13:

The processing unit 1610 may be configured to obtain first information. The communication unit 1620 may be further configured to send second information to a RIS.

In a possible implementation, the first information includes third information, and the processing unit 1610 may be configured to: determine a third precoding matrix, and determine a first precoding matrix and/or a second precoding matrix based on the third precoding matrix and the third information.

In a possible implementation, the communication unit 1620 may be configured to receive the first information from the RIS.

In a possible implementation, the first information indicates a first precoding matrix and/or a second precoding matrix, the first information is from a second apparatus, and the processing unit 1610 may be further configured to determine the first precoding matrix and/or the second precoding matrix based on the first information. Optionally, the communication unit 1620 may be configured to receive the first information from the second apparatus.

In a possible implementation, the communication unit 1620 may be configured to: receive the third information from the RIS, and send the third information to the second apparatus.

The communication apparatus 1600 is configured to implement the functions of the RIS in the method embodiment shown in FIG. 13:

The communication unit 1620 may be configured to send third information to a first apparatus. The communication unit 1620 may be further configured to receive second information from the first apparatus.

The communication apparatus 1600 is configured to implement the functions that are implemented by the second apparatus and that are related to the method embodiment shown in FIG. 13:

The communication unit 1620 may be configured to obtain third information. The processing unit 1610 may be configured to determine a third precoding matrix. The communication unit 1620 may be further configured to send first information to a first apparatus. The first information indicates a first precoding matrix and/or a second precoding matrix. Optionally, the processing unit 1610 may be further configured to determine the first precoding matrix and/or the second precoding matrix based on the third precoding matrix and the third information.

In a possible implementation, the communication unit 1620 may be configured to receive the third information from the first apparatus.

For explanations of the terms and the nouns in the foregoing apparatus embodiment, refer to the descriptions in the foregoing method embodiments. Details are not described herein again.

Module division in embodiments of this application is an example, is merely logical function division, and may be other division during actual implementation. In addition, the functional modules in embodiments of this application may be integrated into one processor, each of the modules may exist alone physically, or two or more modules may be integrated into one module. The integrated module may be implemented in a form of hardware, or may be implemented in a form of a software functional module.

FIG. 17 shows a communication apparatus 1700 according to an embodiment of this application. The communication apparatus 1700 is configured to implement the communication method provided in this application. The communication apparatus 1700 may be a communication apparatus to which the communication method is applied, may be a component in the communication apparatus, or may be an apparatus that can be used with the communication apparatus in a matching manner. The communication apparatus 1700 may be a RIS, a network device, a first apparatus, or a second apparatus. The communication apparatus 1700 may be a chip system or a chip. In this embodiment of this application, the chip system may include a chip, or may include a chip and another discrete component. The communication apparatus 1700 includes at least one processor 1720, configured to implement the communication method provided in embodiments of this application. The communication apparatus 1700 may further include an output interface 1710, and the output interface may also be referred to as an input/output interface. In this embodiment of this application, the output interface 1710 may be configured to communicate with another apparatus through a transmission medium, and a function of the output interface 1710 may include sending and/or receiving. For example, when the communication apparatus 1700 is a chip, the communication apparatus 1700 performs transmission with another chip or a component through the output interface 1710. The processor 1720 may be configured to implement the methods in the foregoing method embodiments.

For example, the processor 1720 may be configured to perform the actions performed by the processing unit 1610, and the output interface 1710 may be configured to perform the actions performed by the communication unit 1620.

Details are not described again.

Optionally, the communication apparatus 1700 may further include at least one memory 1730, configured to store program instructions and/or data. The memory 1730 is coupled to the processor 1720. The coupling in this embodiment of this application may be an indirect coupling or a communication connection between apparatuses, units, or modules in an electrical form, a mechanical form, or another form, and is used for information exchange between the apparatuses, the units, or the modules. The processor 1720 may operate in cooperation with the memory 1730. The processor 1720 may execute the program instructions stored in the memory 1730. At least one of the at least one memory may be integrated with the processor.

In this embodiment of this application, the memory 1730 may be a nonvolatile memory, for example, a hard disk drive (hard disk drive, HDD) or a solid state drive (solid state drive, SSD), or may be a volatile memory (volatile memory), for example, a random access memory (random access memory, RAM). The memory is any other medium that can be configured to carry or store expected program code in a form of instructions or a data structure and that can be accessed by a computer, but is not limited thereto. The memory in this embodiment of this application may alternatively be a circuit or any other apparatus that can implement a storage function, and is configured to store the program instructions and/or the data.

In this embodiment of this application, the processor 1720 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware in the processor and a software module.

FIG. 18 shows a communication apparatus 1800 according to an embodiment of this application. The communication apparatus 1800 is configured to implement the communication method provided in this application. The communication apparatus 1800 may be a communication apparatus to which the communication method in embodiments of this application is applied, may be a component in the communication apparatus, or may be an apparatus that can be used with the communication apparatus in a matching manner. The communication apparatus 1800 may be a RIS, a network device, a first apparatus, or a second apparatus. The data transmission apparatus 1800 may be a chip system or a chip. In this embodiment of this application, the chip system may include a chip, or may include a chip and another discrete component. Some or all of the communication methods using a Huygens equivalent surface provided in the foregoing embodiments may be implemented by hardware, or may be implemented by software. When some or all of the communication methods are implemented by hardware, the data transmission apparatus 1800 may include an input interface circuit 1801, a logic circuit 1802, and an output interface circuit 1803.

Optionally, for example, the apparatus is configured to implement a function of a receiver. The input interface circuit 1801 may be configured to perform the receiving actions performed by the communication unit 1620, the output interface circuit 1803 may be configured to perform the sending actions performed by the communication unit 1620, and the logic circuit 1802 may be configured to perform the actions performed by the processing unit 1610. Details are not described again.

Optionally, during specific implementation, the data transmission apparatus 1800 may be a chip or an integrated circuit.

Some or all of the operations and the functions that are performed by the data transmission apparatus and that are described in the foregoing method embodiments of this application may be implemented by using the chip or the integrated circuit.

An embodiment of this application provides a computer-readable storage medium, storing a computer program. The computer program includes instructions for performing the foregoing method embodiments.

An embodiment of this application provides a computer program product including instructions. When the computer program product is run on a computer, the computer is enabled to perform the foregoing method embodiments.

An embodiment of this application provides a communication system. Specifically, the communication system may include at least two of a network device, a transmitter, a RIS, or a receiver configured to implement the method shown in any one of FIG. 8 or FIG. 11, include at least two of a network device, a RIS, or a terminal device configured to implement the method shown in any one of FIG. 9, FIG. 10, FIG. 12, FIG. 14, or FIG. 15, or include a first apparatus and a RIS configured to implement the method shown in FIG. 13. For details, refer to the related descriptions in the foregoing method embodiments. Details are not described herein again. The communication system may include the structure shown in FIG. 3 or FIG. 4.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or the block diagrams of the method, the device (system), and the computer program product according to embodiments of this application. It should be understood that computer program instructions may be used to implement each procedure and/or each block in the flowcharts and/or the block diagrams and a combination of procedures and/or a combination of blocks in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

Although example embodiments of this application are described, persons skilled in the art can make additional changes and modifications to these embodiments once they learn the basic inventive concept. Therefore, the accompanying claims are intended to be construed as including example embodiments and all changes and modifications falling within the scope of this application.

Clearly, persons skilled in the art can make various modifications and variations to embodiments of this application without departing from the scope of embodiments of this application. In this way, this application is also intended to cover these modifications and variations to embodiments of this application provided that these modifications and variations fall within the scope of the claims of this application and equivalent technologies of the claims.

**Claims**

1. A communication method, comprising:

   receiving, by a reconfigurable intelligent meta-surface RIS, a first signal from a transmitter by using a plurality of precoding matrices in a first codebook of the RIS, wherein channel measurement information corresponding to the first signal is used to determine a first precoding matrix, the plurality of precoding matrices in the first codebook comprise the first precoding matrix, the first codebook is used to adjust a characteristic of a channel between the transmitter and the RIS, one precoding matrix in the first codebook and one precoding matrix in a second codebook of the RIS correspond to one precoding matrix in a third codebook of the RIS, the second codebook is used to adjust a characteristic of a channel between the RIS and a receiver, and the third codebook is used to adjust a characteristic of a channel between the transmitter, the RIS, and the receiver; and

   reflecting, by the RIS, the second signal to the receiver by using a plurality of precoding matrices in the third codebook, wherein the second signal is from the transmitter, channel measurement information corresponding to the second signal is used to determine a second precoding matrix, the plurality of precoding matrices in the third codebook correspond to the first precoding matrix and a plurality of precoding matrices in the second codebook, and the plurality of precoding matrices in the second codebook comprise the second precoding matrix.

2. The method according to claim 1, wherein the method further comprises:
   determining, by the RIS, the first precoding matrix from the plurality of precoding matrices in the first codebook of the RIS based on the channel measurement information corresponding to the first signal.

3. The method according to claim 2, wherein the method further comprises:
   sending, by the RIS, indication information of the first precoding matrix to a network device, wherein the network device comprises the transmitter or the receiver, and the indication information of the first precoding matrix is used to determine the first precoding matrix.

4. The method according to claim 1, wherein the method further comprises:
sending, by the RIS, the channel measurement information corresponding to the first signal to a network device, wherein the network device comprises the transmitter or the receiver.

5. The method according to claim 4, wherein the method further comprises:

   receiving, by the RIS, indication information of the first precoding matrix from the network device; and
   determining, by the RIS, the first precoding matrix based on the indication information of the first precoding matrix.

6. The method according to any one of claims 1 to 5, wherein the method further comprises:
receiving, by the RIS, first indication information from the network device, wherein the first indication information indicates the RIS to receive the first signal by using the plurality of precoding matrices in the first codebook of the RIS.

7. The method according to any one of claims 1 to 6, wherein the method further comprises:

   receiving, by the RIS, indication information of the second precoding matrix from the network device, wherein the network device comprises the transmitter or the receiver; and
   determining, by the RIS, the second precoding matrix based on the indication information of the second precoding matrix.

8. The method according to any one of claims 1 to 6, wherein the method further comprises:

   receiving, by the RIS, the channel measurement information corresponding to the second signal from the network device, wherein the network device comprises the transmitter or the receiver; and
   determining, by the RIS, the second precoding matrix from the plurality of precoding matrices in the second codebook based on the received channel measurement information corresponding to the second signal.

9. The method according to claim 8, wherein the method further comprises:
sending, by the RIS, indication information of the second precoding matrix to the network device, wherein the indication information of the second precoding matrix is used to determine the second precoding matrix.

10. The method according to any one of claims 1 to 9, wherein the method further comprises:
receiving, by the RIS, second indication information from the network device, wherein the second indication information indicates the RIS to reflect the second signal to the receiver by using the plurality of precoding matrices in the third codebook.

11. The method according to claim 10, wherein the second indication information comprises indication information of the plurality of precoding matrices in the second codebook, or the second indication information comprises indication information of the plurality of precoding matrices in the third codebook.

12. A communication method, comprising:

   sending, by a first apparatus, first indication information to a reconfigurable intelligent meta-surface RIS, wherein the first indication information indicates the RIS to receive a first signal from a transmitter by using a plurality of precoding matrices in a first codebook of the RIS, channel measurement information corresponding to the first signal is used to determine a first precoding matrix, the plurality of precoding matrices in the first codebook comprise the first precoding matrix, the first codebook is used to adjust a characteristic of a channel between the transmitter and the RIS, one precoding matrix in the first codebook and one precoding matrix in a second codebook of the RIS correspond to one precoding matrix in a third codebook of the RIS, the second codebook is used to adjust a characteristic of a channel between the RIS and a receiver, and the third codebook is used to adjust a characteristic of a channel between the transmitter, the RIS, and the receiver; and
   sending, by the first apparatus, second indication information to the RIS, wherein the second indication information indicates the RIS to reflect a second signal to the receiver by using a plurality of precoding matrices in the third codebook, the second signal is from the transmitter, channel measurement information corresponding to the second signal is used to determine a second precoding matrix, the plurality of precoding matrices in the third codebook correspond to the first precoding matrix and a plurality of precoding matrices in the second codebook, and the plurality of precoding matrices in the second codebook comprise the second precoding matrix.

13. The method according to claim 12, wherein the method further comprises:

receiving, by the first apparatus, indication information of the first precoding matrix from the RIS; and
determining, by the first apparatus, the first precoding matrix based on the indication information of the first precoding matrix.

14. The method according to claim 12, wherein the method further comprises:

receiving, by the first apparatus, the channel measurement information corresponding to the first signal from the RIS; and
determining, by the first apparatus, the first precoding matrix from the plurality of precoding matrices in the first codebook of the RIS based on the channel measurement information corresponding to the first signal.

15. The method according to claim 14, wherein the method further comprises:
sending, by the first apparatus, indication information of the first precoding matrix to the RIS, wherein the indication information of the first precoding matrix is used to determine the first precoding matrix.

16. The method according to any one of claims 12 to 15, wherein the method further comprises:
sending, by the first apparatus, indication information of the second precoding matrix to the RIS, wherein the indication information of the second precoding matrix is used to determine the second precoding matrix.

17. The method according to any one of claims 12 to 16, wherein the method further comprises:

sending, by the first apparatus, the channel measurement information corresponding to the second signal to the RIS;
receiving, by the first apparatus, indication information of the second precoding matrix from the RIS; and
determining, by the first apparatus, the second precoding matrix based on the indication information of the second precoding matrix.

18. The method according to any one of claims 12 to 17, wherein the first apparatus comprises the transmitter or the receiver.

19. A communication method, comprising:

reflecting, by a reconfigurable intelligent meta-surface RIS, a third signal to a receiver by using a first group of precoding matrices, wherein the third signal is from a transmitter, channel measurement information corresponding to the third signal is used to determine a fourth precoding matrix, the first group of precoding matrices are a plurality of precoding matrices in a third codebook of the RIS, the first group of precoding matrices correspond to a plurality of precoding matrices in a fourth codebook and one precoding matrix in a fifth codebook, and the plurality of precoding matrices in the fourth codebook comprise the fourth precoding matrix; and
reflecting, by the RIS, a fourth signal to the receiver by using a second group of precoding matrices, wherein the second group of precoding matrices are a plurality of precoding matrices in the third codebook of the RIS, the second group of precoding matrices correspond to the fourth precoding matrix and a plurality of precoding matrices in the fifth codebook, channel measurement information corresponding to the fourth signal is used to determine a fifth precoding matrix, and the plurality of precoding matrices in the fifth codebook comprise the fifth precoding matrix, wherein
the fourth codebook and the fifth codebook each are a first codebook of the RIS or a second codebook of the RIS, the fourth codebook is different from the fifth codebook, one precoding matrix in the first codebook and one precoding matrix in the second codebook of the RIS correspond to one precoding matrix in the third codebook, the third codebook is used to adjust a characteristic of a channel between the transmitter, the RIS, and the receiver, the first codebook is used to adjust a characteristic of a channel between the transmitter and the RIS, and the second codebook is used to adjust a characteristic of a channel between the RIS and the receiver.

20. The method according to claim 19, wherein the method further comprises:
receiving, by the RIS, third indication information from a network device, wherein the third indication information indicates the RIS to reflect the third signal to the receiver by using the first group of precoding matrices.

21. The method according to claim 20, wherein the third indication information specifically comprises indication information of the plurality of precoding matrices in the fourth codebook, or the third indication information specifically comprises indication information of the first group of precoding matrices.

22. The method according to any one of claims 19 to 21, wherein the method further comprises:

receiving, by the RIS, indication information of the fourth precoding matrix from the network device, wherein the network device comprises the transmitter or the receiver; and
determining, by the RIS, the fourth precoding matrix based on the indication information of the fourth precoding matrix.

23. The method according to any one of claims 19 to 22, wherein the method further comprises:
receiving, by the RIS, fourth indication information from the network device, wherein the fourth indication information indicates the RIS to reflect the fourth signal to the receiver by using the second group of precoding matrices.

24. The method according to claim 23, wherein the fourth indication information specifically comprises indication information of the plurality of precoding matrices in the fifth codebook, or the fourth indication information specifically comprises indication information of the second group of precoding matrices.

25. The method according to any one of claims 19 to 24, wherein the method further comprises:

receiving, by the RIS, indication information of the fifth precoding matrix from the network device, wherein the network device comprises the transmitter or the receiver; and
determining, by the RIS, the fifth precoding matrix based on the indication information of the fifth precoding matrix.

26. A communication method, comprising:

sending, by a first apparatus, third indication information to a reconfigurable intelligent meta-surface RIS, wherein the third indication information indicates the RIS to reflect a third signal to a receiver by using a first group of precoding matrices, the third signal is from a transmitter, channel measurement information corresponding to the third signal is used to determine a fourth precoding matrix, the first group of precoding matrices are a plurality of precoding matrices in a third codebook of the RIS, the first group of precoding matrices correspond to a plurality of precoding matrices in a fourth codebook and one precoding matrix in a fifth codebook, and the plurality of precoding matrices in the fourth codebook comprise the fourth precoding matrix; and
sending, by the first apparatus, fourth indication information to the RIS, wherein the third indication information indicates the RIS to reflect a fourth signal to the receiver by using a second group of precoding matrices, the second group of precoding matrices are a plurality of precoding matrices in the third codebook of the RIS, the second group of precoding matrices correspond to the fourth precoding matrix and a plurality of precoding matrices in the fifth codebook, channel measurement information corresponding to the fourth signal is used to determine a fifth precoding matrix, and the plurality of precoding matrices in the fifth codebook comprise the fifth precoding matrix, wherein
the fourth codebook and the fifth codebook each are a first codebook of the RIS or a second codebook of the RIS, the fourth codebook is different from the fifth codebook, one precoding matrix in the first codebook and one precoding matrix in the second codebook of the RIS correspond to one precoding matrix in the third codebook, the third codebook is used to adjust a characteristic of a channel between the transmitter, the RIS, and the receiver, the first codebook is used to adjust a characteristic of a channel between the transmitter and the RIS, and the second codebook is used to adjust a characteristic of a channel between the RIS and the receiver.

27. The method according to claim 26, wherein the third indication information specifically comprises indication information of the plurality of precoding matrices in the fourth codebook, or the third indication information specifically comprises indication information of the first group of precoding matrices.

28. The method according to claim 26 or 27, wherein the fourth indication information specifically comprises indication information of the plurality of precoding matrices in the fifth codebook, or the fourth indication information specifically comprises indication information of the second group of precoding matrices.

29. The method according to any one of claims 26 to 28, wherein the method further comprises:
sending, by the first apparatus, indication information of the fourth precoding matrix to the RIS, wherein the first apparatus comprises the transmitter or the receiver, and the indication information of the fourth precoding matrix is used to determine the fourth precoding matrix.

30. The method according to any one of claims 26 to 29, wherein the method further comprises:
sending, by the first apparatus, indication information of the fifth precoding matrix to the RIS, wherein the first apparatus comprises the transmitter or the receiver, and the indication information of the fifth precoding matrix is used to determine the fifth precoding matrix.

31. The method according to any one of claims 26 to 30, wherein the first apparatus comprises the transmitter or the receiver.

32. A communication method, comprising:

obtaining, by a first apparatus, first information, wherein the first information is used to determine a first precoding matrix and/or a second precoding matrix, the first precoding matrix belongs to a first codebook of a reconfigurable intelligent meta-surface RIS, the second precoding matrix belongs to a second codebook of the RIS, one precoding matrix in the first codebook and one precoding matrix in the second codebook correspond to one precoding matrix in a third codebook of the RIS, the third codebook is used to adjust a characteristic of a channel between a transmitter, the RIS, and a receiver, the first codebook is used to adjust a characteristic of a channel between the transmitter and the RIS, and the second codebook is used to adjust a characteristic of a channel between the RIS and the receiver; and
sending, by the first apparatus, second information to the RIS, wherein the second information indicates the first precoding matrix and/or the second precoding matrix.

33. The method according to claim 32, wherein the first information comprises third information, the third information indicates a correspondence between precoding matrices in the first codebook, precoding matrices in the second codebook, and precoding matrices in the third codebook, and the method further comprises:

determining, by the first apparatus, a third precoding matrix, wherein the third precoding matrix belongs to the third codebook; and
determining, by the first apparatus, the first precoding matrix and/or the second precoding matrix based on the third precoding matrix and the third information.

34. The method according to claim 33, wherein the obtaining, by a first apparatus, first information comprises:
receiving, by the first apparatus, the first information from the RIS.

35. The method according to claim 32, wherein the first information indicates the first precoding matrix and/or the second precoding matrix, the first information is from a second apparatus, and the method further comprises:

determining, by the first apparatus, the first precoding matrix and/or the second precoding matrix based on the first information, wherein
the first apparatus is the transmitter, and the second apparatus is the receiver; or
the first apparatus is the receiver, and the second apparatus is the transmitter.

36. The method according to claim 35, wherein the method further comprises:

receiving, by the first apparatus, third information from the RIS, wherein the third information indicates a correspondence between precoding matrices in the first codebook, precoding matrices in the second codebook, and precoding matrices in the third codebook; and
sending, by the first apparatus, the third information to the second apparatus.

37. The method according to any one of claims 31 to 34, wherein the first apparatus comprises the transmitter or the receiver.

38. A communication method, comprising:

sending, by a reconfigurable intelligent meta-surface RIS, third information to a first apparatus, wherein the third information indicates a correspondence between precoding matrices in a first codebook of the RIS, precoding matrices in a second codebook of the RIS, and precoding matrices in a third codebook of the RIS, the third codebook is used to adjust a characteristic of a channel between a transmitter, the RIS, and a receiver, the first codebook is used to adjust a characteristic of a channel between the transmitter and the RIS, and the second codebook is used to adjust a characteristic of a channel between the RIS and the receiver; and

receiving, by the RIS, second information, wherein the second information indicates a first precoding matrix and/or a second precoding matrix, the first precoding matrix belongs to the first codebook, and the second precoding matrix belongs to the second codebook.

39. The method according to claim 38, wherein the first apparatus comprises the transmitter or the receiver.

40. A communication method, comprising:

obtaining, by a second apparatus, third information, wherein the third information indicates a correspondence between precoding matrices in a first codebook of a reconfigurable intelligent meta-surface RIS, precoding matrices in a second codebook of the RIS, and precoding matrices in a third codebook of the RIS, one precoding matrix in the first codebook and one precoding matrix in the second codebook correspond to one precoding matrix in the third codebook, the third codebook is used to adjust a characteristic of a channel between a transmitter, the RIS, and a receiver, the first codebook is used to adjust a characteristic of a channel between the transmitter and the RIS, and the second codebook is used to adjust a characteristic of a channel between the RIS and the receiver;

determining, by the second apparatus, a third precoding matrix based on channel measurement information, wherein the third precoding matrix belongs to the third codebook; and

sending, by the second apparatus, the first information to a first apparatus, wherein the first information indicates a first precoding matrix and/or a second precoding matrix, the first precoding matrix belongs to the first codebook, the second precoding matrix belongs to the second codebook, and the first precoding matrix and/or the second precoding matrix are/is determined based on the third precoding matrix and the third information.

41. The method according to claim 40, wherein the obtaining, by a second apparatus, third information comprises: receiving, by the second apparatus, the third information from the first apparatus.

42. The method according to claim 40 or 41, wherein the first apparatus comprises the transmitter, and the second apparatus comprises the receiver; or
the first apparatus comprises the receiver, and the second apparatus comprises the transmitter.

43. A communication apparatus, comprising a processor, wherein the processor is configured to execute one or more computer programs stored in a memory, to enable the communication apparatus to perform the method according to any one of claims 1 to 11, enable the communication apparatus to perform the method according to any one of claims 12 to 18, enable the communication apparatus to perform the method according to any one of claims 19 to 25, to enable the communication apparatus to perform the method according to any one of claims 26 to 31, enable the communication apparatus to perform the method according to any one of claims 32 to 37, enable the communication apparatus to perform the method according to claim 38 or 39, or enable the communication apparatus to perform the method according to any one of claims 40 to 42.

44. The communication apparatus according to claim 43, wherein the communication apparatus further comprises the memory.

45. The communication apparatus according to claim 43 or 44, wherein the communication apparatus is a chip or a chip system.

46. A communication apparatus, comprising modules configured to perform the method according to any one of claims 1 to 11, comprising modules configured to perform the method according to any one of claims 12 to 18, comprising modules configured to perform the method according to any one of claims 19 to 25, comprising modules configured to perform the method according to any one of claims 26 to 31, comprising modules configured to perform the method according to any one of claims 32 to 37, comprising modules configured to perform the method according to claim 38 or 39, or comprising modules configured to perform the method according to any one of claims 40 to 42.

47. A chip system, wherein the chip system comprises a logic circuit and an input/output interface, wherein the input/output interface is configured to communicate with another communication apparatus other than the chip system, and the logic circuit is configured to perform the method according to any one of claims 1 to 11, the logic circuit is configured to perform the method according to any one of claims 12 to 18, the logic circuit is configured to perform the method according to any one of claims 19 to 25, the logic circuit is configured to perform the method according to any one of claims 26 to 31, the logic circuit is configured to perform the method according to any one of claims 32 to 37, the logic circuit is configured to perform the method according to claim 38 or 39, or the logic circuit is configured to perform the method according to any one of claims 40 to 42.

48. A computer-readable storage medium, wherein the computer-readable storage medium is configured to store a computer program, and when the computer program is run on a computer, the computer is enabled to perform the method according to any one of claims 1 to 11, the computer is enabled to perform the method according to any one of claims 12 to 18, the computer is enabled to perform the method according to any one of claims 19 to 25, the computer is enabled to perform the method according to any one of claims 26 to 31, the computer is enabled to perform the method according to any one of claims 32 to 37, the computer is enabled to perform the method according to claim 38 or 39, or the computer is enabled to perform the method according to any one of claims 40 to 42.

49. A computer program product, wherein the computer program product comprises a computer program, and when the computer program is run on a computer, the computer is enabled to perform the method according to any one of claims 1 to 11, the computer is enabled to perform the method according to any one of claims 12 to 18, the computer is enabled to perform the method according to any one of claims 19 to 25, the computer is enabled to perform the method according to any one of claims 26 to 31, the computer is enabled to perform the method according to any one of claims 32 to 37, the computer is enabled to perform the method according to claim 38 or 39, or the computer is enabled to perform the method according to any one of claims 40 to 42.

50. A communication system, comprising a communication apparatus configured to perform the method according to any one of claims 1 to 11 and a communication apparatus configured to perform the method according to any one of claims 12 to 18;

   comprising a communication apparatus configured to perform the method according to any one of claims 19 to 25 and a communication apparatus configured to perform the method according to any one of claims 26 to 31;
   comprising a communication apparatus configured to perform the method according to any one of claims 32 to 37 and a communication apparatus configured to perform the method according to claim 38 or 39; or
   comprising a communication apparatus configured to perform the method according to any one of claims 32 to 37, a communication apparatus configured to perform the method according to claim 38 or 39, and a communication apparatus configured to perform the method according to any one of claims 40 to 42.

51. A communication method, comprising:

   sending, by a first apparatus, first indication information to a reconfigurable intelligent meta-surface RIS, wherein the first indication information indicates the RIS to receive the first signal from a transmitter by using a plurality of precoding matrices in a first codebook of the RIS, channel measurement information corresponding to the first signal is used to determine a first precoding matrix, the plurality of precoding matrices in the first codebook comprise the first precoding matrix, the first codebook is used to adjust a characteristic of a channel between the transmitter and the RIS, one precoding matrix in the first codebook and one precoding matrix in a second codebook of the RIS correspond to one precoding matrix in a third codebook of the RIS, the second codebook is used to adjust a characteristic of a channel between the RIS and a receiver, and the third codebook is used to adjust a characteristic of a channel between the transmitter, the RIS, and the receiver;
   receiving, by the RIS, the first indication information;
   receiving, by the RIS, the first signal from the transmitter by using the plurality of precoding matrices in the first codebook;
   sending, by the first apparatus, second indication information to the RIS, wherein the second indication information indicates the RIS to reflect a second signal to the receiver by using a plurality of precoding matrices in the third codebook, the second signal is from the transmitter, channel measurement information corresponding to the second signal is used to determine a second precoding matrix, the plurality of precoding matrices in the third codebook correspond to the first precoding matrix and a plurality of precoding matrices in the second codebook, and the plurality of precoding matrices in the second codebook comprise the second precoding matrix.
   receiving, by the RIS, the second indication information; and
   reflecting, by the RIS, the second signal to the receiver by using the plurality of precoding matrices in the third codebook.

52. The method according to claim 51, wherein the method further comprises:
determining, by the RIS, the first precoding matrix from the plurality of precoding matrices in the first codebook of the RIS based on the channel measurement information corresponding to the first signal.

53. The method according to claim 52, wherein the method further comprises:

sending, by the RIS, indication information of the first precoding matrix to the first apparatus;
receiving, by the first apparatus, the indication information of the first precoding matrix from the RIS; and
determining, by the first apparatus, the first precoding matrix based on the indication information of the first precoding matrix.

54. The method according to claim 51, wherein the method further comprises:

sending, by the RIS, the channel measurement information corresponding to the first signal to the first apparatus;
receiving, by the first apparatus, the channel measurement information corresponding to the first signal from the RIS; and
determining, by the first apparatus, the first precoding matrix from the plurality of precoding matrices in the first codebook of the RIS based on the channel measurement information corresponding to the first signal.

55. The method according to claim 54, wherein the method further comprises:

sending, by the first apparatus, indication information of the first precoding matrix to the RIS;
receiving, by the RIS, the indication information of the first precoding matrix from the first apparatus; and
determining, by the RIS, the first precoding matrix based on the indication information of the first precoding matrix.

56. The method according to any one of claims 51 to 55, wherein the method further comprises:

sending, by the first apparatus, indication information of the second precoding matrix to the RIS;
receiving, by the RIS, the indication information of the second precoding matrix from the first apparatus; and
determining, by the RIS, the second precoding matrix based on the indication information of the second precoding matrix.

57. The method according to any one of claims 51 to 55, wherein the method further comprises:

sending, by the first apparatus, the channel measurement information corresponding to the second signal to the RIS;
receiving, by the RIS, the channel measurement information corresponding to the second signal from the first apparatus; and
determining, by the RIS, the second precoding matrix from the plurality of precoding matrices in the second codebook based on the received channel measurement information corresponding to the second signal.

58. The method according to claim 57, wherein the method further comprises:

sending, by the RIS, indication information of the second precoding matrix to the first apparatus;
receiving, by the first apparatus, the indication information of the second precoding matrix from the RIS; and
determining, by the first apparatus, the second precoding matrix based on the indication information of the second precoding matrix.

59. The method according to any one of claims 51 to 58, wherein the second indication information comprises indication information of the plurality of precoding matrices in the second codebook, or the second indication information comprises indication information of the plurality of precoding matrices in the third codebook.

60. The method according to any one of claims 51 to 59, wherein the first apparatus comprises the transmitter or the receiver.

61. A communication method, comprising:

sending, by a first apparatus, third indication information to a reconfigurable intelligent meta-surface RIS, wherein the third indication information indicates the RIS to reflect a third signal to a receiver by using a first group of precoding matrices, the third signal is from a transmitter, channel measurement information corresponding to the third signal is used to determine a fourth precoding matrix, the first group of precoding matrices are a plurality of precoding matrices in a third codebook of the RIS, the first group of precoding matrices correspond to a plurality of precoding matrices in a fourth codebook and one precoding matrix in a fifth codebook, and the plurality of precoding matrices in the fourth codebook comprise the fourth precoding matrix;

receiving, by the RIS, the third indication information from the first apparatus;

reflecting, by the RIS, the third signal to the receiver by using the first group of precoding matrices;

sending, by the first apparatus, fourth indication information to the RIS, wherein the third indication information indicates the RIS to reflect a fourth signal to the receiver by using a second group of precoding matrices, the second group of precoding matrices are a plurality of precoding matrices in the third codebook of the RIS, the second group of precoding matrices correspond to the fourth precoding matrix and a plurality of precoding matrices in the fifth codebook, channel measurement information corresponding to the fourth signal is used to determine a fifth precoding matrix, and the plurality of precoding matrices in the fifth codebook comprise the fifth precoding matrix;

receiving, by the RIS, the fourth indication information from the first apparatus; and

reflecting, by the RIS, the fourth signal to the receiver by using the second group of precoding matrices, wherein the fourth codebook and the fifth codebook each are a first codebook of the RIS or a second codebook of the RIS, the fourth codebook is different from the fifth codebook, one precoding matrix in the first codebook and one precoding matrix in the second codebook of the RIS correspond to one precoding matrix in the third codebook, the third codebook is used to adjust a characteristic of a channel between the transmitter, the RIS, and the receiver, the first codebook is used to adjust a characteristic of a channel between the transmitter and the RIS, and the second codebook is used to adjust a characteristic of a channel between the RIS and the receiver.

62. The method according to claim 61, wherein the third indication information specifically comprises indication information of the plurality of precoding matrices in the fourth codebook, or the third indication information specifically comprises indication information of the first group of precoding matrices.

63. The method according to claim 61 or 62, wherein the fourth indication information specifically comprises indication information of the plurality of precoding matrices in the fifth codebook, or the fourth indication information specifically comprises indication information of the second group of precoding matrices.

64. The method according to any one of claims 61 to 63, wherein the method further comprises:

sending, by the first apparatus, indication information of the fourth precoding matrix to the RIS;
receiving, by the RIS, the indication information of the fourth precoding matrix from the first apparatus; and
determining, by the RIS, the fourth precoding matrix based on the indication information of the fourth precoding matrix.

65. The method according to any one of claims 61 to 64, wherein the method further comprises:

sending, by the first apparatus, indication information of the fifth precoding matrix to the RIS;
receiving, by the RIS, the indication information of the fifth precoding matrix from the first apparatus; and
determining, by the RIS, the fifth precoding matrix based on the indication information of the fifth precoding matrix.

66. The method according to any one of claims 61 to 65, wherein the first apparatus comprises the transmitter or the receiver.

67. A communication method, comprising:

obtaining, by a first apparatus, first information, wherein the first information is used to determine a first precoding matrix and/or a second precoding matrix, the first precoding matrix belongs to a first codebook of a reconfigurable intelligent meta-surface RIS, the second precoding matrix belongs to a second codebook of the RIS, one precoding matrix in the first codebook and one precoding matrix in the second codebook correspond to one precoding matrix in a third codebook of the RIS, the third codebook is used to adjust a characteristic of a channel between a transmitter, the RIS, and a receiver, the first codebook is used to adjust a characteristic of a channel between the transmitter and the RIS, and the second codebook is used to adjust a characteristic of a channel between the RIS and the receiver;

sending, by the first apparatus, second information to the RIS, wherein the second information indicates the first precoding matrix and/or the second precoding matrix; and
receiving, by the RIS, the second information from the first apparatus.

68. The method according to claim 67, wherein the first information comprises third information, the third information indicates a correspondence between precoding matrices in the first codebook, precoding matrices in the second codebook, and precoding matrices in the third codebook, and the method further comprises:

determining, by the first apparatus, a third precoding matrix, wherein the third precoding matrix belongs to the third codebook; and
determining, by the first apparatus, the first precoding matrix and/or the second precoding matrix based on the third precoding matrix and the third information.

69. The method according to claim 68, wherein the method further comprises:

sending, by the RIS, the third information; and
the obtaining, by a first apparatus, first information comprises:
receiving, by the first apparatus, the first information from the RIS.

70. The method according to claim 67, wherein the first information indicates the first precoding matrix and/or the second precoding matrix, and the method further comprises:

sending, by the second apparatus, the first information to the first apparatus;
the obtaining, by a first apparatus, first information comprises:

receiving, by the first apparatus, the first information from the second apparatus; and
the method further comprises:

determining, by the first apparatus, the first precoding matrix and/or the second precoding matrix based on the first information, wherein
the first apparatus is the transmitter, and the second apparatus is the receiver; or
the first apparatus is the receiver, and the second apparatus is the transmitter.

71. The method according to claim 70, wherein the method further comprises:

sending, by the RIS, the third information to the first apparatus;
receiving, by the first apparatus, the third information from the RIS, wherein the third information indicates a correspondence between precoding matrices in the first codebook, precoding matrices in the second codebook, and precoding matrices in the third codebook;
sending, by the first apparatus, the third information to the second apparatus;
receiving, by the second apparatus, the third information from the first apparatus;
determining, by the second apparatus, a third precoding matrix based on channel measurement information, wherein the third precoding matrix belongs to the third codebook; and
determining, by the second apparatus, the first precoding matrix and/or the second precoding matrix based on the third precoding matrix and the third information.

72. The method according to any one of claims 67 to 69, wherein the first apparatus is the transmitter, and the second apparatus is the receiver; or
the first apparatus is the receiver, and the second apparatus is the transmitter.

FIG. 1

FIG. 2

Incident
wave

RIS unit
Refracted
transmission wave

Reflected
wave

Diode

O

Reflection angle 2

Receive

Generalized Snell's law

Incident
angle

Reflection
angle 1 =
incident
angle

Send

FIG. 3

RIS

Incident-
side
codebook

Emergent-
side
codebook

RIS beam 1

RIS beam 2

RIS beam 3

Network device beam

UE beam

Network
device

UE

FIG. 4

RIS

$\Phi_0$

$\Phi_1$

$\Phi_2$

$\Phi_1$

$\Phi_3$

$\Phi_2$

$\Phi_0$

Network
device

UE

$\Phi_m$

$\Phi_n$

FIG. 5

Concatenated codebook:
$$\Phi_{m,n}(p,q) = -\frac{2\pi}{\lambda}\left(\sin\theta_m\cos\varphi_m pdx + \sin\theta_m\sin\varphi_m qdy + \sin\theta_n\cos\varphi_n pdx + \sin\theta_n\sin\varphi_n qdy\right)$$

Incident-side codebook:
$$\Phi_m(p,q) = -\frac{2\pi}{\lambda}\left(\sin\theta_m\cos\varphi_m pdx + \sin\theta_m\sin\varphi_m qdy\right)$$

Emergent-side codebook:
$$\Phi_n(p,q) = -\frac{2\pi}{\lambda}\left(\sin\theta_n\cos\varphi_n pdx + \sin\theta_n\sin\varphi_n qdy\right)$$

FIG. 6

FIG. 7

FIG. 8

| Network device | | RIS | | Terminal device |
|---|---|---|---|---|

First indication information
- - - - - - - - - - - - - - - - ->

First signal
------------------------------>

Receive the first signal by using a plurality of precoding matrices in a first codebook, and determine a first precoding matrix from the plurality of precoding matrices based on channel measurement information corresponding to the first signal

Indication information of the first precoding matrix
<------------------------------

Second indication information
- - - - - - - - - - - - - - - - ->

Second signal
------------------------------>

Reflect the second signal to the terminal device by using a plurality of precoding matrices in a third codebook

Second signal
------------------------------>

Determine channel measurement information corresponding to the second signal

Channel measurement information corresponding to the second signal
<------------------------------

Determine a second precoding matrix based on the channel measurement information corresponding to the second signal and information about a plurality of precoding matrices in a second codebook

Indication information of the second precoding matrix
------------------------------>

FIG. 9

| Network device | | RIS | | Terminal device |
| --- | --- | --- | --- | --- |

First indication information

First signal

Receive the first signal by using a plurality of precoding matrices in a first codebook, and determine a first precoding matrix from the plurality of precoding matrices based on channel measurement information corresponding to the first signal

Indication information of the first precoding matrix

Second indication information

Second signal

Reflect the second signal to the network device by using a plurality of precoding matrices in a third codebook

Second signal

Determine channel measurement information corresponding to the second signal, and determine a second precoding matrix based on the channel measurement information corresponding to the second signal and information about a plurality of precoding matrices in a second codebook

Indication information of the second precoding matrix

FIG. 10

FIG. 11

```
┌──────────┐                    ┌──────────┐            ┌──────────┐
│ Network  │                    │   RIS    │            │ Terminal │
│ device   │                    │          │            │ device   │
└──────────┘                    └──────────┘            └──────────┘
     │        Codebook information      │                    │
     │◄────────────────────────────────│                    │
     │        Control information       │                    │
     │┄┄┄┄┄┄┄┄┄┄┄┄┄┄┄┄┄┄┄┄┄┄┄┄┄┄┄┄┄┄┄┄►│                    │
     │                                  │     Third signal   │
     │                                  │◄───────────────────│
     │        ┌─────────────────────────────────────┐        │
     │        │ Reflect the third signal to the     │        │
     │        │ network device by using a first     │        │
     │        │ group of precoding matrices         │        │
     │        └─────────────────────────────────────┘        │
     │            Third signal           │                   │
     │◄──────────────────────────────────│                   │
┌────────────────────────────────────────┐                   │
│ Determine channel measurement information                  │
│ corresponding to the third signal, and determine a         │
│ fourth precoding matrix from a plurality of                │
│ precoding matrices in a fourth codebook based on           │
│ the channel measurement information                        │
│ corresponding to the third signal and information          │
│ about the plurality of precoding matrices in the           │
│ fourth codebook                                            │
└────────────────────────────────────────┘                   │
     │        Control information       │                    │
     │┄┄┄┄┄┄┄┄┄┄┄┄┄┄┄┄┄┄┄┄┄┄┄┄┄┄┄┄┄┄┄┄►│                    │
     │                                  │     Fourth signal  │
     │                                  │◄───────────────────│
     │        ┌─────────────────────────────────────┐        │
     │        │ Reflect the third signal to the     │        │
     │        │ network device by using a second    │        │
     │        │ group of precoding matrices         │        │
     │        └─────────────────────────────────────┘        │
     │            Fourth signal          │                   │
     │◄──────────────────────────────────│                   │
┌────────────────────────────────────────┐                   │
│ Determine channel measurement information                  │
│ corresponding to the fourth signal, and determine          │
│ a fifth precoding matrix from a plurality of               │
│ precoding matrices in a fifth codebook based on            │
│ the channel measurement information                        │
│ corresponding to the fourth signal and                     │
│ information about the plurality of precoding               │
│ matrices in the fifth codebook                             │
└────────────────────────────────────────┘                   │
     │   Indication information of the  │                    │
     │   fourth precoding matrix and/or │                    │
     │   indication information of the fifth                 │
     │       precoding matrix           │                    │
     │┄┄┄┄┄┄┄┄┄┄┄┄┄┄┄┄┄┄┄┄┄┄┄┄┄┄┄┄┄┄┄┄►│                    │
```

FIG. 12

51

EP 4 580 134 A1

First
apparatus

RIS

S1301. Obtain first information, where
the first information is used to determine a first precoding matrix
and/or a second precoding matrix, the first precoding matrix
belongs to a first codebook, and the second precoding matrix
belongs to a second codebook

S1302: Second information, where the second information
indicates the first precoding matrix and/or the second precoding
matrix

FIG. 13

Network
device

RIS

Terminal
device

Codebook information,
including third information

Control information

Reference signal

Reflect the reference signal to the terminal
device by using a plurality of precoding
matrices in a third codebook

Reference signal

Determine channel measurement information
corresponding to the reference signal

Channel measurement
information corresponding to the
reference signal

Determine a third precoding matrix of the
RIS based on the channel measurement
information corresponding to the reference
signal and information about the plurality
of precoding matrices in the third codebook

Determine a first precoding matrix and/or a
second precoding matrix based on the third
precoding matrix of the RIS and the third
information

Second information

FIG. 14

52

| Network device | RIS | Terminal device |
|---|---|---|

Codebook information, including third information

Control information

Control information, including the third information

Reference signal

Receive and modulate the reference signal by using a plurality of precoding matrices in a third codebook

Modulated signal

Determine channel measurement information corresponding to the reference signal, determine a third precoding matrix of the RIS based on the channel measurement information corresponding to the reference signal, and determine a first precoding matrix and/or a second precoding matrix based on the third precoding matrix of the RIS and the third information

Indication information of the first precoding matrix and/or indication information of the second precoding matrix

Second information

FIG. 15

Communication apparatus
1600

Processing unit 1610

Communication unit
1620

FIG. 16

1700

1710

Output interface

1720

Processor

1730

Memory

FIG. 17

1801

1800

Input interface circuit

1802

Logic circuit

1803

Output interface circuit

FIG. 18

## INTERNATIONAL SEARCH REPORT

| International application No. |
| --- |
| **PCT/CN2022/115644** |

| | | |
| --- | --- | --- |
| **A.** | **CLASSIFICATION OF SUBJECT MATTER** | |
| | H04L 27/00(2006.01)i | |

According to International Patent Classification (IPC) or to both national classification and IPC

| | | |
| --- | --- | --- |
| **B.** | **FIELDS SEARCHED** | |

Minimum documentation searched (classification system followed by classification symbols)

    IPC：H04L

Documentation searched other than minimum documentation to the extent that such documents are included in the fields searched

Electronic data base consulted during the international search (name of data base and, where practicable, search terms used)

    CNABS; CNTXT; VEN; WOTXT; USTXT; EPTXT; CNKI: 可重构智能表面, 智能反射面, 码本, 解耦, 扫描, 次数, 时延, 最佳, 预编码矩阵, 发送, 接收, 反射, reconfigurable intelligent meta-surface, RIS, codebook, scan, delay, precoding matrix, PMI, reflect

| | | |
| --- | --- | --- |
| **C.** | **DOCUMENTS CONSIDERED TO BE RELEVANT** | |

| Category* | Citation of document, with indication, where appropriate, of the relevant passages | Relevant to claim No. |
| --- | --- | --- |
| A | CN 113746764 A (HANGZHOU FEIFEI TECHNOLOGY CO., LTD.) 03 December 2021 (2021-12-03)<br>    description, paragraphs [0031]-[0052] | 1-72 |
| A | WO 2021092746 A1 (HUAWEI TECHNOLOGIES CO., LTD.) 20 May 2021 (2021-05-20)<br>    entire document | 1-72 |
| A | CN 113193894 A (SOUTHEAST UNIVERSITY) 30 July 2021 (2021-07-30)<br>    entire document | 1-72 |
| A | CN 113794493 A (JIANGSU UNIVERSITY OF TECHNOLOGY) 14 December 2021 (2021-12-14)<br>    entire document | 1-72 |
| A | CN 114640381 A (WUHAN-RIES COMMUNICATION SCIENCE AND TECHNOLOGY LTD) 17 June 2022 (2022-06-17)<br>    entire document | 1-72 |

☐ Further documents are listed in the continuation of Box C.     ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **04 May 2023** | **18 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/115644**

| Patent document cited in search report | | | Publication date (day/month/year) | Patent family member(s) | Publication date (day/month/year) |
|---|---|---|---|---|---|
| CN | 113746764 | A | 03 December 2021 | None | |
| WO | 2021092746 | A1 | 20 May 2021 | None | |
| CN | 113193894 | A | 30 July 2021 | None | |
| CN | 113794493 | A | 14 December 2021 | None | |
| CN | 114640381 | A | 17 June 2022 | None | |

Form PCT/ISA/210 (patent family annex) (July 2022)